# EUROPEAN PATENT SPECIFICATION

(11) **EP 3 729 168 B1**
(45) Date of publication and mention of the grant of the patent: **19.08.2026**
(21) Application number: 17935061.6
(22) Date of filing: 18.12.2017
(51) Int. Cl.: G02B 27/01, F21V 8/00, G02B 27/10

(54) **MULTIBEAM ELEMENT-BASED NEAR-EYE DISPLAY, SYSTEM, AND METHOD**
MEHRSTRAHLELEMENTBASIERTE AUGENNAHE ANZEIGE, SYSTEM UND VERFAHREN
AFFICHAGE PROCHE DES YEUX BASÉ SUR DES ÉLÉMENTS À FAISCEAUX MULTIPLES, SYSTÈME ET PROCÉDÉ

(43) Date of publication of application: 28.10.2020
(73) Proprietor: LEIA Inc., Menlo Park, CA 94025 (US)
(72) Inventor: FATTAL, David A., Menlo Park, California 94025 (US)
(74) Representative: Carpmaels & Ransford LLP
(86) International application number: PCT/US2017/067131
(87) International publication number: WO 2019/125394

(56) References cited:
- WO-A1-2017/039820
- WO-A1-2017/041073
- WO-A1-2017/065819
- WO-A1-2017/123259
- CA-A1- 3 021 958
- US-B2- 9 250 445
- US-B2- 9 639 985
- US-B2- 9 753 286

## Description

### CROSS-REFERENCE TO RELATED APPLICATIONS

N/A

### STATEMENT REGARDING FEDERALLY SPONSORED RESEARCH OR DEVELOPMENT

N/A

### BACKGROUND

Electronic displays are a nearly ubiquitous medium for communicating information to users of a wide variety of devices and products. Most commonly employed electronic displays include the cathode ray tube (CRT), plasma display panels (PDP), liquid crystal displays (LCD), electroluminescent displays (EL), organic light emitting diode (OLED) and active matrix OLEDs (AMOLED) displays, electrophoretic displays (EP) and various displays that employ electromechanical or electrofluidic light modulation (e.g., digital micromirror devices, electrowetting displays, etc.). Generally, electronic displays may be categorized as either active displays (i.e., displays that emit light) or passive displays (i.e., displays that modulate light provided by another source). Among the most obvious examples of active displays are CRTs, PDPs and OLEDs/AMOLEDs. Displays that are typically classified as passive when considering emitted light are LCDs and EP displays. Passive displays, while often exhibiting attractive performance characteristics including, but not limited to, inherently low power consumption, may find somewhat limited use in many practical applications given the lack of an ability to emit light.

In addition to being classified as either active or passive, electronic displays may also be characterized according to an intended viewing distance of the electronic display. For example, the vast majority of electronic displays are intended to be located at a distance that is within a normal or 'natural' accommodation range of the human eye. As such, the electronic display may be viewed directly and naturally without additional optics. Some displays, on the other hand, are specifically designed to be located closer to a user's eye than the normal accommodation range. These electronic displays are often referred to as 'near-eye' displays and generally include optics of some form to facilitate viewing. For example, the optics may provide a virtual image of the physical electronic display that is within normal accommodation range to enable comfortable viewing even though the physical electronic display itself may not be directly viewable. Examples of applications that employ near-eye displays include, but are not limited to, head mounted displays (HMDs) and similar wearable displays as well as some head-up displays. Various virtual reality systems as well as augmented reality systems frequently include near-eye displays, since the near-eye display may provide a more immersive experience than conventional displays in such applications.

WO2017065819A1 describes a multibeam diffraction grating-based near-eye display. WO2017041073A1 describes a multiview display with head tracking.

### BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:
Figure 1A illustrates a perspective view of a multiview display in an example, according to an embodiment consistent with the principles described herein.
Figure 1B illustrates a graphical representation of the angular components of a light beam having a particular principal angular direction of a multiview display in an example, according to an embodiment consistent with the principles described herein.
Figure 2 illustrates a cross sectional view of a diffraction grating in an example, according to a comparative example consistent with the principles described herein.
Figure 3 illustrates a block diagram of a near-eye display in an example, according to an embodiment of the principles described herein.
Figure 4 illustrates a schematic view of optics of a near-eye display in an example, according to an embodiment consistent with the principles described herein.
Figure 5 illustrates a cross sectional view of a near-eye display having an optical system that includes a freeform prism in an example, according to an embodiment consistent with the principles described herein.
Figure 6A illustrates a cross sectional view of a multibeam element-based display in an example, according to an embodiment consistent with the principles described herein.
Figure 6B illustrates a plan view of a multibeam element-based display in an example, according to an embodiment consistent with the principles described herein.
Figure 6C illustrates a perspective view of a multibeam element-based display in an example, according to an embodiment consistent with the principles described herein.
Figure 7A illustrates a cross sectional view of a portion of a multibeam element-based display including a multibeam element in a comparative example. according to an embodiment consistent with the principles described herein.
Figure 7B illustrates a cross sectional view of a portion of a multibeam element-based display including a multibeam element in a comparative example.
Figure 8A illustrates a cross sectional view of a diffraction grating comprising a plurality of sub-gratings in a comparative example.
Figure 8B illustrates a plan view of the diffraction grating illustrated in Figure 8A in a comparative example.
Figure 9 illustrates a plan view of a pair of multibeam elements in comparative example.
Figure 10A illustrates a cross sectional view of a portion of a multibeam element-based display including a multibeam element in a comparative example.
Figure 10B illustrates a cross sectional view of a portion of a multibeam element-based display including a multibeam element in a comparative example.
Figure 11 illustrates a cross sectional view of a portion of a multibeam element-based display including a multibeam element in an example, according to the invention.
Figure 12 illustrates a block diagram of a near-eye binocular display system in an example, according to an embodiment consistent with the principles described herein.
Figure 13 illustrates a flow chart of a method of near-eye display operation in an example, according to an embodiment consistent with the principles described herein.

Certain examples and embodiments have other features that are one of in addition to and in lieu of the features illustrated in the above-referenced figures. These and other features are detailed below with reference to the above-referenced figures.

### DETAILED DESCRIPTION

Embodiments and examples in accordance with the principles described herein provide a near-eye image display that provides accommodation support. In particular, according to various embodiments of the principles described herein, a near-eye display employs a multiview display to produce a plurality of different views of an image. The plurality of different views are projected or mapped to different locations within an eye box at which the near-eye multiview image is to be viewed. The different views at different locations may support accommodation (i.e., support focusing the eye on an object) with respect to the multiview image, according to various embodiments.

Herein a 'two-dimensional display' or '2D display' is defined as a display configured to provide a view of an image that is substantially the same regardless of a direction from which the image is viewed (i.e., within a predefined viewing angle or range of the 2D display). A liquid crystal display (LCD) found in may smart phones and computer monitors are examples of 2D displays. In contrast herein, a 'multiview display' is defined as an electronic display or display system configured to provide different views of a multiview image in or from different view directions. In particular, the different views may represent different perspective views of a scene or object of the multiview image. In some instances, a multiview display may also be referred to as a three-dimensional (3D) display, e.g., when simultaneously viewing two different views of the multiview image provides a perception of viewing a three dimensional image.

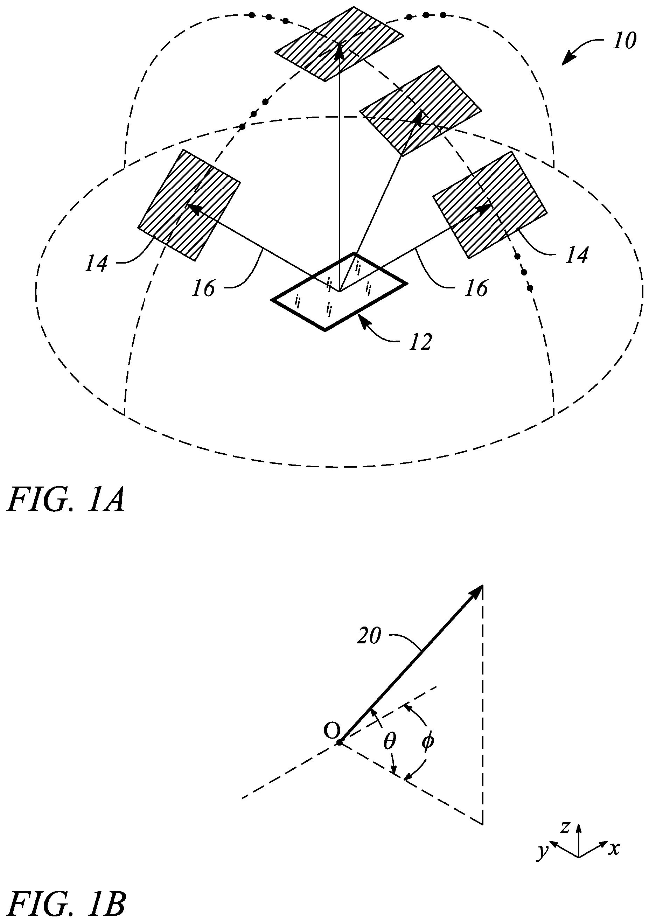

Figure 1A illustrates a perspective view of a multiview display 10 in an example, according to an embodiment consistent with the principles described herein. As illustrated in Figure 1A, the multiview display 10 comprises a screen 12 to display or provide a multiview image to be viewed. The multiview display 10 provides different views 14 of the multiview image in different view directions 16 relative to the screen 12. The view directions 16 are illustrated as arrows extending from the screen 12 in various different principal angular directions; the different views 14 are illustrated as shaded polygonal boxes at the termination of the arrows (i.e., depicting the view directions 16); and only four views 14 and four view directions 16 are illustrated, all by way of example and not limitation. Note that while the different views 14 are illustrated in Figure 1A as being above the screen, the views 14 actually appear on or in a vicinity of the screen 12 when the multiview image is displayed on the multiview display 10. Depicting the views 14 above the screen 12 is only for simplicity of illustration and is meant to represent viewing the multiview display 10 from a respective one of the view directions 16 corresponding to a particular view 14.

A view direction or equivalently a light beam having a direction corresponding to a view direction of a multiview display generally has a principal angular direction given by angular components {*θ*, *ϕ*}, by definition herein. The angular component *θ* is referred to herein as the 'elevation component' or 'elevation angle' of the light beam. The angular component *ϕ* is referred to as the 'azimuth component' or 'azimuth angle' of the light beam. By definition, the elevation angle *θ* is an angle in a vertical plane (e.g., perpendicular to a plane of the multiview display screen while the azimuth angle *ϕ* is an angle in a horizontal plane (e.g., parallel to the multiview display screen plane).

Figure 1B illustrates a graphical representation of the angular components {*θ*, *ϕ*} of a light beam 20 having a particular principal angular direction or simply 'direction' corresponding to a view direction (e.g., view direction 16 in Figure 1A) of a multiview display in an example, according to an embodiment consistent with the principles described herein. In addition, the light beam 20 is emitted or emanates from a particular point, by definition herein. That is, by definition, the light beam 20 has a central ray associated with a particular point of origin within the multiview display. Figure 1B also illustrates the light beam (or view direction) point of origin O.

Further herein, the term 'multiview' as used in the terms 'multiview image' and 'multiview display' is defined as a plurality of views representing different perspectives or including angular disparity between views of the view plurality. In addition, herein the term 'multiview' explicitly includes more than two different views (i.e., a minimum of three views and generally more than three views), by definition herein. As such, 'multiview display' as employed herein is explicitly distinguished from a stereoscopic display that includes only two different views to represent a scene or an image. Note however, while multiview images and multiview displays may include more than two views, by definition herein, multiview images may be viewed (e.g., on a multiview display) as a stereoscopic pair of images by selecting only two of the multiview views to view at a time (e.g., one view per eye).

A 'multiview pixel' is defined herein as a set of sub-pixels or 'view' pixels in each of a similar plurality of different views of a multiview display. In particular, a multiview pixel may have an individual view pixels corresponding to or representing a view pixel in each of the different views of the multiview image. Moreover, the view pixels of the multiview pixel are so-called 'directional pixels' in that each of the view pixels is associated with a predetermined view direction of a corresponding one of the different views, by definition herein. Further, according to various examples and embodiments, the different view pixels of a multiview pixel may have equivalent or at least substantially similar locations or coordinates in each of the different views. For example, a first multiview pixel may have individual view pixels located at {*x*₁, *y*₁} in each of the different views of a multiview image, while a second multiview pixel may have individual view pixels located at {*x*₂, *y*₂} in each of the different views, and so on.

In some embodiments, a number of view pixels in a multiview pixel may be equal to a number of different views of the multiview display. For example, the multiview pixel may provide sixty-four (64) view pixels in associated with a multiview display having 64 different views. In another example, the multiview display may provide an eight by four array of views (i.e., 32 views) and the multiview pixel may include thirty-two (32) view pixels (i.e., one for each view). Additionally, each different view pixel may have an associated direction (e.g., light beam direction) that corresponds to a different one of the view directions corresponding to the 64 different views, for example. Further, according to some embodiments, a number of multiview pixels of the multiview display may be substantially equal to a number of pixels (i.e., pixels that make up a selected view) in the multiview display views. For example, if a view includes six hundred forty by four hundred eighty view pixels (i.e., a 640 x 480 view resolution), the multiview display may have three hundred seven thousand two hundred (307,200) multiview pixels. In another example, when the views include one hundred by one hundred pixels, the multiview display may include a total of ten thousand (i.e., 100 x 100 = 10,000) multiview pixels.

Herein, a 'light guide' is defined as a structure that guides light within the structure using total internal reflection or 'TIR'. In particular, the light guide may include a core that is substantially transparent at an operational wavelength of the light guide. In various examples, the term 'light guide' generally refers to a dielectric optical waveguide that employs total internal reflection to guide light at an interface between a dielectric material of the light guide and a material or medium that surrounds that light guide. By definition, a condition for total internal reflection is that a refractive index of the light guide is greater than a refractive index of a surrounding medium adjacent to a surface of the light guide material. In some embodiments, the light guide may include a coating in addition to or instead of the aforementioned refractive index difference to further facilitate the total internal reflection. The coating may be a reflective coating, for example. The light guide may be any of several light guides including, but not limited to, one or both of a plate or slab guide and a strip guide.

Further herein, the term 'plate' when applied to a light guide as in a 'plate light guide' is defined as a piece-wise or differentially planar layer or sheet, which is sometimes referred to as a 'slab' guide. In particular, a plate light guide is defined as a light guide configured to guide light in two substantially orthogonal directions bounded by a top surface and a bottom surface (i.e., opposite surfaces) of the light guide. Further, by definition herein, the top and bottom surfaces are both separated from one another and may be substantially parallel to one another in at least a differential sense. That is, within any differentially small section of the plate light guide, the top and bottom surfaces are substantially parallel or co-planar.

In some embodiments, the plate light guide may be substantially flat (i.e., confined to a plane) and therefore, the plate light guide is a planar light guide. In other embodiments, the plate light guide may be curved in one or two orthogonal dimensions. For example, the plate light guide may be curved in a single dimension to form a cylindrical shaped plate light guide. However, any curvature has a radius of curvature sufficiently large to insure that total internal reflection is maintained within the plate light guide to guide light.

Herein, an 'angle-preserving scattering feature' or equivalently an 'angle-preserving scatterer' is any feature or scatterer configured to scatter light in a manner that substantially preserves in scattered light an angular spread of light incident on the feature or scatterer. In particular, by definition, an angular spread σ*ₛ* of light scattered by an angle-preserving scattering feature is a function of an angular spread σ of the incident light (i.e., σ*ₛ =f*(*σ*)*).* In some embodiments, the angular spread σ*ₛ* of the scattered light is a linear function of the angular spread or collimation factor σ of the incident light (e.g., σ*ₛ = a*·*σ*, where *a* is an integer). That is, the angular spread σₛ of light scattered by an angle-preserving scattering feature may be substantially proportional to the angular spread or collimation factor σ of the incident light. For example, the angular spread σ*ₛ* of the scattered light may be substantially equal to the incident light angular spread σ (e.g., σ*ₛ* ≈ σ). A uniform diffraction grating (i.e., a diffraction grating having a substantially uniform or constant diffractive feature spacing or grating pitch) is an example of an angle-preserving scattering feature. In contrast, a Lambertian scatterer or a Lambertian reflector as well as a general diffuser (e.g., having or approximating Lambertian scattering) are not angle-preserving scatterers, by definition herein.

Herein, a 'polarization-preserving scattering feature' or equivalently a 'polarization-preserving scatterer' is any feature or scatterer configured to scatter light in a manner that substantially preserves in scattered light a polarization or at least a degree of polarization of the light incident on the feature or scatterer. Accordingly, a 'polarization-preserving scattering feature' is any feature or scatterer where a degree of polarization of a light incident on the feature or scatterer is substantially equal to the degree of polarization of the scattered light. Further, by definition, 'polarization-preserving scattering' is scattering (e.g., of guided light) that preserves or substantially preserves a predetermined polarization of the light being scattered. The light being scattered may be polarized light provided by a polarized light source, for example.

Herein, a 'diffraction grating' is generally defined as a plurality of features (i.e., diffractive features) arranged to provide diffraction of light incident on the diffraction grating. In some examples, the plurality of features may be arranged in a periodic or quasi-periodic manner. For example, the diffraction grating may include a plurality of features (e.g., a plurality of grooves or ridges in a material surface) arranged in a one-dimensional (1D) array. In other examples, the diffraction grating may be a two-dimensional (2D) array of features. The diffraction grating may be a 2D array of bumps on or holes in a material surface, for example.

As such, and by definition herein, the 'diffraction grating' is a structure that provides diffraction of light incident on the diffraction grating. If the light is incident on the diffraction grating from a light guide, the provided diffraction or diffractive scattering may result in, and thus be referred to as, 'diffractive coupling' in that the diffraction grating may couple light out of the light guide by diffraction. The diffraction grating also redirects or changes an angle of the light by diffraction (i.e., at a diffractive angle). In particular, as a result of diffraction, light leaving the diffraction grating generally has a different propagation direction than a propagation direction of the light incident on the diffraction grating (i.e., incident light). The change in the propagation direction of the light by diffraction is referred to as 'diffractive redirection' herein. Hence, the diffraction grating may be understood to be a structure including diffractive features that diffractively redirects light incident on the diffraction grating and, if the light is incident from a light guide, the diffraction grating may also diffractively couple out the light from the light guide.

Further, by definition herein, the features of a diffraction grating are referred to as 'diffractive features' and may be one or more of at, in and on a material surface (i.e., a boundary between two materials). The surface may be a surface of a light guide, for example. The diffractive features may include any of a variety of structures that diffract light including, but not limited to, one or more of grooves, ridges, holes and bumps at, in or on the surface. For example, the diffraction grating may include a plurality of substantially parallel grooves in the material surface. In another example, the diffraction grating may include a plurality of parallel ridges rising out of the material surface. The diffractive features (e.g., grooves, ridges, holes, bumps, etc.) may have any of a variety of cross sectional shapes or profiles that provide diffraction including, but not limited to, one or more of a sinusoidal profile, a rectangular profile (e.g., a binary diffraction grating), a triangular profile and a saw tooth profile (e.g., a blazed grating).

According to various examples described herein, a diffraction grating (e.g., a diffraction grating of a multibeam element, as described below) may be employed to diffractively scatter or couple light out of a light guide (e.g., a plate light guide) as a light beam. In particular, a diffraction angle *θₘ* of or provided by a locally periodic diffraction grating may be given by equation (1) as: ${θ}_{m} = {sin}^{- 1} \left(n sin {θ}_{i}-\frac{mλ}{d}\right)$ where *λ* is a wavelength of the light, *m* is a diffraction order, *n* is an index of refraction of a light guide, d is a distance or spacing between features of the diffraction grating, *θᵢ* is an angle of incidence of light on the diffraction grating. For simplicity, equation (1) assumes that the diffraction grating is adjacent to a surface of the light guide and a refractive index of a material outside of the light guide is equal to one (i.e., *nₒᵤₜ =* 1). In general, the diffraction order *m* is given by an integer. A diffraction angle *θₘ* of a light beam produced by the diffraction grating may be given by equation (1) where the diffraction order is positive (e.g., *m* > 0). For example, first-order diffraction is provided when the diffraction order *m* is equal to one (i.e., *m =* 1).

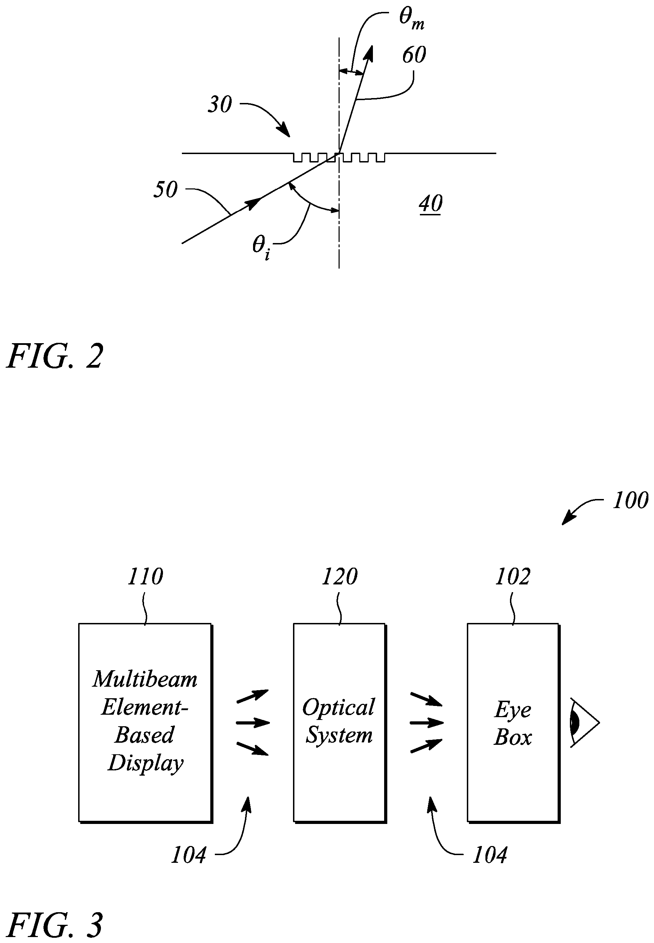

Figure 2 illustrates a cross sectional view of a diffraction grating 30 in an example, according to an embodiment consistent with the principles described herein. For example, the diffraction grating 30 may be located on a surface of a light guide 40. In addition, Figure 2 illustrates a light beam 50 incident on the diffraction grating 30 at an incident angle *θᵢ*. The incident light beam 50 may be a beam of guided light (i.e., a guided light beam) within the light guide 40. Also illustrated in Figure 2 is a directional light beam 60 diffractively produced and coupled-out by the diffraction grating 30 as a result of diffraction of the incident light beam 50. The directional light beam 60 has a diffraction angle *θₘ* (or 'principal angular direction' herein) as given by equation (1). The diffraction angle *θₘ* may correspond to a diffraction order *'m'* of the diffraction grating 30, for example diffraction order *m* = 1 (i.e., a first diffraction order).

By definition herein, a 'multibeam element' is a structure or element of a backlight or a display that produces light that includes a plurality of light beams. In some embodiments, the multibeam element may be optically coupled to a light guide of a backlight to provide the plurality of light beams by coupling or scattering out a portion of light guided in the light guide. Further, the light beams of the plurality of light beams produced by a multibeam element have different principal angular directions from one another, by definition herein. In particular, by definition, a light beam of the plurality has a predetermined principal angular direction that is different from another light beam of the light beam plurality. As such, the light beam is referred to as a 'directional light beam' and the light beam plurality may be termed a 'directional light beam plurality, by definition herein.

Furthermore, the directional light beam plurality may represent a light field. For example, the directional light beam plurality may be confined to a substantially conical region of space or have a predetermined angular spread that includes the different principal angular directions of the light beams in the light beam plurality. As such, the predetermined angular spread of the light beams in combination (i.e., the light beam plurality) may represent the light field.

According to various embodiments, the different principal angular directions of the various directional light beams of the plurality are determined by a characteristic including, but not limited to, a size (e.g., length, width, area, etc.) of the multibeam element. In some embodiments, the multibeam element may be considered an 'extended point light source', i.e., a plurality of point light sources distributed across an extent of the multibeam element, by definition herein. Further, a directional light beam produced by the multibeam element has a principal angular direction given by angular components {*θ*, *ϕ*}, by definition herein, and as described above with respect to Figure 1B.

Herein a 'collimator' is defined as substantially any optical device or apparatus that is configured to collimate light. For example, a collimator may include, but is not limited to, a collimating mirror or reflector, a collimating lens, a diffraction grating, a tapered light guide, and various combinations thereof. According to various embodiments, an amount of collimation provided by the collimator may vary in a predetermined degree or amount from one embodiment to another. Further, the collimator may be configured to provide collimation in one or both of two orthogonal directions (e.g., a vertical direction and a horizontal direction). That is, the collimator may include a shape or similar collimating characteristic in one or both of two orthogonal directions that provides light collimation, according to some embodiments.

Herein, a 'collimation factor' is defined as a degree to which light is collimated. In particular, a collimation factor defines an angular spread of light rays within a collimated beam of light, by definition herein. For example, a collimation factor σ may specify that a majority of light rays in a beam of collimated light is within a particular angular spread (e.g., +/- σ degrees about a central or principal angular direction of the collimated light beam). The light rays of the collimated light beam may have a Gaussian distribution in terms of angle and the angular spread may be an angle determined by at one-half of a peak intensity of the collimated light beam, according to some examples.

Herein, a 'light source' is defined as a source of light (e.g., an optical emitter configured to produce and emit light). For example, the light source may comprise an optical emitter such as a light emitting diode (LED) that emits light when activated or turned on. In particular, herein the light source may be substantially any source of light or comprise substantially any optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by the light source may have a color (i.e., may include a particular wavelength of light), or may be a range of wavelengths (e.g., white light). In some embodiments, the light source may comprise a plurality of optical emitters. For example, the light source may include a set or group of optical emitters in which at least one of the optical emitters produces light having a color, or equivalently a wavelength, that differs from a color or wavelength of light produced by at least one other optical emitter of the set or group. The different colors may include primary colors (e.g., red, green, blue) for example. A 'polarized' light source is defined herein as substantially any light source that produces or provides light having a predetermined polarization. For example, the polarized light source may comprise a polarizer at an output of an optical emitter of the light source.

The term 'accommodation' as employed herein refers to a process of focusing upon an object or image element by changing an optical power of the eye. In other words, accommodation is the ability of the eye to focus. Herein, 'accommodation range' or equivalently 'accommodation distance' is defined as a range of distance from the eye at which focus may be achieved. While accommodation range may vary from one individual to another, herein a minimum 'normal' accommodation distance of about twenty-five (25) centimeters (cm) is assumed, for example, by way of simplicity and not by way of limitation. As such, for an object to be within a so-called 'normal accommodation range, the object is generally understood to be located greater than about 25 cm from the eye.

Herein, 'eye box' is defined as a region or volume of space in which an image formed by a display or other optical system (e.g., lens system) may be viewed. In other words, the eye box defines a location in space within which a user's eye may be placed in order to view an image produced by the display system. In some embodiments, the eye box may represent a two dimensional region of space (e.g., a region with length and width but without substantial depth), while in other embodiments, the eye box may include a three-dimensional region of space (e.g., a region with length, width and depth). Further, while referred to as a 'box', the eye box may not be restricted to a box that rectangular in shape. For example, the eye box may comprise a cylindrical region of space, in some embodiments.

Further, as used herein, the article 'a' is intended to have its ordinary meaning in the patent arts, namely 'one or more'. For example, 'a multibeam element' means one or more multibeam elements and as such, 'the multibeam element' means 'the multibeam element (s)' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or may mean plus or minus 10%, or plus or minus 5%, or plus or minus 1%, unless otherwise expressly specified. Further, the term 'substantially' as used herein means a majority, or almost all, or all, or an amount within a range of about 51% to about 100%. Moreover, examples herein are intended to be illustrative only and are presented for discussion purposes and not by way of limitation.

According to some embodiments of the principles described herein, a near-eye display is provided. Figure 3 illustrates a block diagram of a near-eye display 100 in an example, according to an embodiment of the principles described herein. The near-eye display 100 is configured to provide a multiview image at an eye box 102 of the near-eye display 100. In particular, the near-eye display 100 may be configured to provide a plurality of different views 104 of the multiview image. Further, the different views 104 may be provided at different locations within the eye box 102. According to various embodiments, the different views 104 provided at different locations within the eye box 102 are configured to impart focus depth cues to a user of the near-eye display 100, according to various embodiments. The focus depth cues may enable the user to perceive depth or distance within the multiview image based on the focus depth cues, for example. The focus depth cues imparted to a user by the near-eye display 100 may include, but are not limited to, accommodation and retinal blurring.

As illustrated in Figure 3, the near-eye display 100 comprises a multibeam element-based display 110. The multibeam element-based display 110 is configured to provide the plurality of different views 104 of the multiview image. According to various embodiments, substantially any number of different views may be provided as the plurality of different views 104. For example, the plurality of different views 104 of the multiview image may include two, three, four, five, six, seven, eight or more different views. In other examples, the plurality of different views 104 of the multiview image includes a relatively large number of different views up to and including, but not limited to, sixteen (16), thirty-two (32), sixty-four (64), one hundred twenty-eight (128), or two hundred fifty-six (256) different views. In some embodiments, the plurality of different views 104 includes at least four different views.

In some examples, the multiview image provided or displayed by the near-eye display 100 comprises only three-dimensional (3D) information or content (e.g., a 3D image representing a 3D object or scene). As such, the multiview image may be referred to as a 'complete' multiview or 3D image. In other examples, the multiview image may include portions that provide 3D content along with portion that include two-dimensional (2D) information or content (e.g., 2D image portions). When the multiview image comprises 3D content or equivalently a '3D image,' the plurality of different views 104 may represent different perspective views of the 3D image. According to the principles described herein, the different views may enhance a user's perception of depth within the displayed image through one or both of retinal blurring and accommodation, for example. In some examples (e.g., in a near-eye binocular display system, described below), accommodation may mitigate effects of the so-called accommodation-convergence discrepancy often encountered in 3D imagery and in certain 3D displays.

The near-eye display 100 illustrated in Figure 3 further comprises an optical system 120. According to various embodiments, the optical system 120 is configured to relay the multiview image to the eye box 102 of the near-eye display 100. In particular, according to various embodiments, the optical system 120 is configured to relay the plurality of different views 104 of the multiview image to a corresponding plurality of different locations within the eye box 102. The relay of the different views 104 to the different locations within the eye box 102 is configured to impart focus depth cues to a user of the near-eye display 100, according to various embodiments. For example, a first view of the multiview image may be relayed by the optical system 120 to a first location, while a second view may be relayed by the optical system 120 to a second location within the eye box 102 that is separated from the first location. The first and second locations may be laterally separated from one another, for example. The separation of the first and second views at the corresponding first and second locations may allow a user to accommodate differently within the multiview image with respect to the two views thereof, for example.

According to some embodiments, a total angular extent of the plurality of different views 104 provided by the multibeam element-based display 110 at an input aperture of the optical system 120 is configured to correspond to a size of the input aperture. In particular, an angle subtended by a combination of the different views 104 of the plurality is configured such that no substantial portion of any of the different views 104 lies outside of or beyond the input aperture. In other words, substantially all output light beams of the multibeam element-based display 110 associated with the different views 104 are configured to be received within the input aperture of the optical system 120, according to some embodiments. In some examples, the total angular extent (i.e., subtended angle) of the plurality of different views 104 may be configured to substantially correspond to the input aperture size one or both of by a predetermined distance between the multibeam element-based display 110 and the optical system input aperture and by a predetermined angular spread of the different views 104 provided by the multibeam element-based display 110.

According to some embodiments, the optical system 120 comprises a magnifier. In some embodiments, the magnifier comprises a simple magnifier. The simple magnifier is configured to provide a virtual image of the multiview image located a distance from the eye box 102 corresponding to a normal accommodation range of an eye of a user. Further, the virtual image provided by the simple magnifier includes the plurality of different views 104 of the multiview image, according to various embodiments. In other embodiments, the magnifier may be a complex magnifier (e.g., multiple lenses configured to provide magnification).

As employed herein, a 'simple magnifier' is defined as a lens or similar optical apparatus that forms a magnified or enlarged virtual image of a smaller object or image (i.e., the simple magnifier provides angular magnification). The virtual image formed by the simple magnifier may be formed at an output of the simple magnifier or equivalently at an output aperture or iris of the simple magnifier (e.g., at the eye box 102). Further, by definition herein, the simple magnifier may form the enlarged virtual image at an apparent or virtual distance that is greater than an actual distance of the object. As such, the simple magnifier may be used provide a user or 'viewer' the ability to focus on an object that is located less than a normal accommodation range or distance from the eye of the user. Herein, 'normal accommodation' is generally achievable at and thus is defined herein as a distance that is greater than about twenty-five (25) centimeters (cm) from a user's eye, according to some embodiments. As a result, the simple magnifier of the optical system 120 may allow the plurality of different views 104 of the multiview image (i.e., the 'object') to be comfortably viewed in focus by the user even though the multibeam element-based display 110 that provides the multiview image is closer than a normal accommodation distance (i.e., closer than about 25 centimeters) from the user's eye (i.e., or equivalently the eye box 102 of the near-eye display 100).

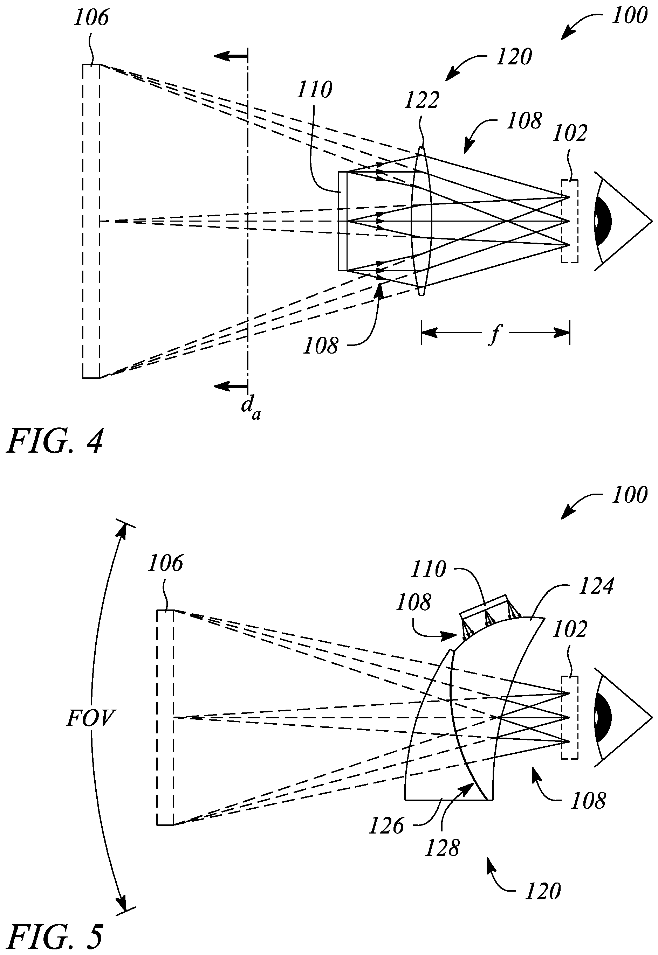

Figure 4 illustrates a schematic view of optics of the near-eye display 100 in an example, according to an embodiment consistent with the principles described herein. As illustrated, the optical system 120 comprises a simple magnifier 122 having a focal length *f*. The simple magnifier 122 in Figure 4 is illustrated as a biconvex lens by way of example and not limitation. The simple magnifier 122 may be located a distance from the eye box 102 corresponding to the focal length *f* of the simple magnifier 122 (e.g., as illustrated in Figure 4). Further, the simple magnifier 122 is located between the multibeam element-based display 110 and the eye box 102. The simple magnifier 122 is configured to provide a virtual image 106 of the multiview image formed by the plurality of different views (e.g., different views 104 in Figure 3) from the multibeam element-based display 110 (i.e., as seen at the eye box 102 when viewed through the simple magnifier 122). Due to the magnification provided by the simple magnifier 122, the virtual image 106 is located (or at least appears to be located) at a greater distance from the eye box 102 than that of the actual or physical image (i.e., display image) produced by the multibeam element-based display 110. In particular, the virtual image 106 may be located within a normal accommodation range or distance *dₐ* of the human eye when viewed from the eye box 102, while the multibeam element-based display 110 (or equivalently, the image produced or displayed by the multibeam element-based display 110) may be closer to the eye box 102 than the normal accommodation range, according to some embodiments. Thus, the simple magnifier 122 may facilitate comfortable viewing of the multibeam element-based display 110 (or equivalently an output or virtual image 106 of the multibeam element-based display 110) at the eye box 102, for example.

Further illustrated in Figure 4, as solid and dashed lines, are light rays 108 emanating from the multibeam element-based display 110, as further described below. The solid lines depict actual light rays 108 associated with the different views 104 of the multiview image provided by the multibeam element-based display 110, while the dashed lines depict ray projections corresponding to the virtual image 106. The light rays 108 illustrated in Figure 4 may correspond to various directional light beams (i.e., rays of light) produced by the multibeam element-based display 110, as described below, for example. Further, the light rays 108 depicted as converging at different points within the eye box 102 may represent different views of the multiview image provided by the multibeam element-based display 110 after the different views have been relayed to different locations within the eye box 102.

According to some embodiments, both of the multibeam element-based display 110 and the optical system 120 are located within and substantially block a portion of a field-of-view (FOV) of a user. In these embodiments, the near-eye display 100 may be a virtual reality display. In particular, the near-eye display 100 may be configured to supplant or at least substantially supplant a view of a physical environment (i.e., real world view) with the near-eye display image within the blocked FOV portion. That is, the near-eye display image may substantially replace the physical environment view with the blocked FOV portion. According to various embodiments, the blocked FOV portion may include some or all of the user's FOV. By supplanting the physical environment view, the user is provided with a virtual reality view provided by the near-eye display image (and associated plurality of different views) instead of the physical environment view.

Herein, the 'view of the physical environment' or 'physical environment view' is defined as a view that a user would have in the absence of the near-eye display 100. Equivalently, the physical environment is anything beyond the near-eye display 100 that may be visible to the user, and the physical environment 'view' is anything that would be within the FOV of the user, exclusive of any effect that the near-eye display 100 may have on the user's view, by definition herein.

In other embodiments, the multibeam element-based display 110 is located outside of the FOV of the user, while the optical system 120 or a portion thereof is located within the FOV. In these embodiments, the near-eye display 100 may be an augmented reality display. In particular, the near-eye display 100 may be configured to augment a view of the physical environment with the near-eye display image (and associated different views 104 of the plurality). Moreover, as an augmented reality display, the near-eye display 100 is configured to provide a view to the user that is a superposition or combination of the near-eye display image and the view of the physical environment beyond the near-eye display 100.

In some embodiments, the optical system 120 of the near-eye display 100 configured as an augmented reality display comprises a freeform prism. The freeform prism is configured to relay the multiview image including the plurality of different views 104 from the multibeam element-based display 110 to the eye box 102 for viewing by a user. Moreover, the freeform prism is configured to relay the multiview image from the multibeam element-based display 110 that is located beyond or outside of an FOV of the user. The freeform prism relays the multiview image using total internal reflection between two surfaces (e.g., a front surface and a back surface) of the freeform prism, according to various embodiments. In some embodiments, the freeform prism is or may serve as a simple magnifier (e.g., the simple magnifier 122).

In some embodiments, the optical system 120 configured as an augmented reality display may further comprise a freeform compensation lens. The freeform compensation lens may also be referred to as a freeform corrector. In particular, the freeform compensation lens is configured to compensate or correct for an effect that the freeform prism has on light passing through the optical system 120 from a physical environment beyond the optical system 120 to the eye box 102. That is, the freeform compensation lens enables a user to have a clear view of the physical environment (i.e., within the user's FOV) without substantial distortion that may be introduced by the freeform prism, according to various embodiments.

Figure 5 illustrates a cross sectional view of a near-eye display 100 having an optical system 120 that includes a freeform prism 124 in an example, according to an embodiment consistent with the principles described herein. As illustrated in Figure 5, the freeform prism 124 of the optical system 120 is positioned between the multibeam element-based display 110 and the eye box 102 (i.e., an exit pupil) of the near-eye display 100. Light representing the multiview image including the plurality of different views 104 provided by the multibeam element-based display 110 is relayed by the freeform prism 124 from an input aperture thereof to the eye box 102. Light from the multibeam element-based display 110 is illustrated as light rays 108 in Figure 5. Relay of the light rays 108 from an input of the freeform prism 124 to an output thereof may be provided by total internal reflection within the freeform prism 124, according to various embodiments.

Figure 5 also illustrates an FOV of a user. The virtual image 106 is within the FOV to provide a superposition of the virtual image 106 and a view of the physical environment within the FOV. Further, the multibeam element-based display 110 is outside of the FOV, as illustrated in Figure 5. As such, Figure 5 may illustrate an augmented reality display embodiment of the near-eye display 100, for example.

The optical system 120 illustrated in Figure 5 further comprises a freeform compensation lens 126. According to various embodiments, the freeform compensation lens 126 may be provided in an optical path between the physical environment (e.g., to be viewed by a user) and the eye box 102. In particular, as illustrated, the freeform compensation lens 126 is located adjacent to the freeform prism 124 and between the physical environment and the freeform prism 124. The freeform compensation lens 126 is configured to correct for effects of the freeform prism 124 such that light rays (not illustrated) pass from objects in the physical environment to the eye box 102 according to a substantially straight path (i.e., the light rays are substantially undistorted). In some embodiments (as illustrated), a partial reflector or partially reflective surface 128 may be provided between the freeform compensation lens 126 and the freeform prism 124. The partially reflective surface 128 is configured to reflect light that is incident on the partially reflective surface 128 from within the freeform prism 124 and also configured to allow light from the physical environment to pass through the partially reflective surface 128.

Referring again to Figure 3, in some embodiments, the multibeam element-based display 110 comprises a light guide configured to guide a collimated light beam at a non-zero propagation angle. The multibeam element-based display 110 further comprises an array of multibeam elements at or adjacent to a surface of the light guide, in some embodiments. According to various embodiments, a multibeam element of the array is configured to diffractively couple out a portion of the guided collimated light beam as a plurality of couple-out light beams having different principal angular directions that correspond to view directions of the plurality of different views 104 of the multiview image.

According to various embodiments, the multibeam element-based display 110 of the near-eye display 100 comprises an array of multibeam elements. The multibeam element array is configured to provide a plurality of directional light beams having directions corresponding to respective view directions of the plurality of different views of the multiview image. The multibeam element-based display 110 of the near-eye display 100 further comprises an array of light valves configured to modulate the plurality of directional light beams to provide the multiview image, according to various embodiments.

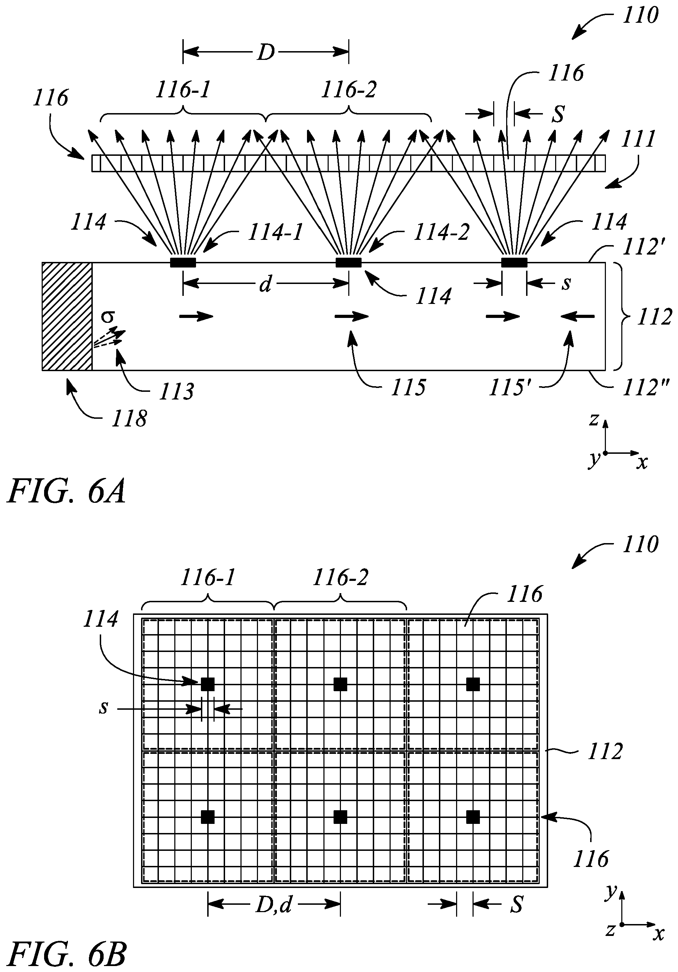

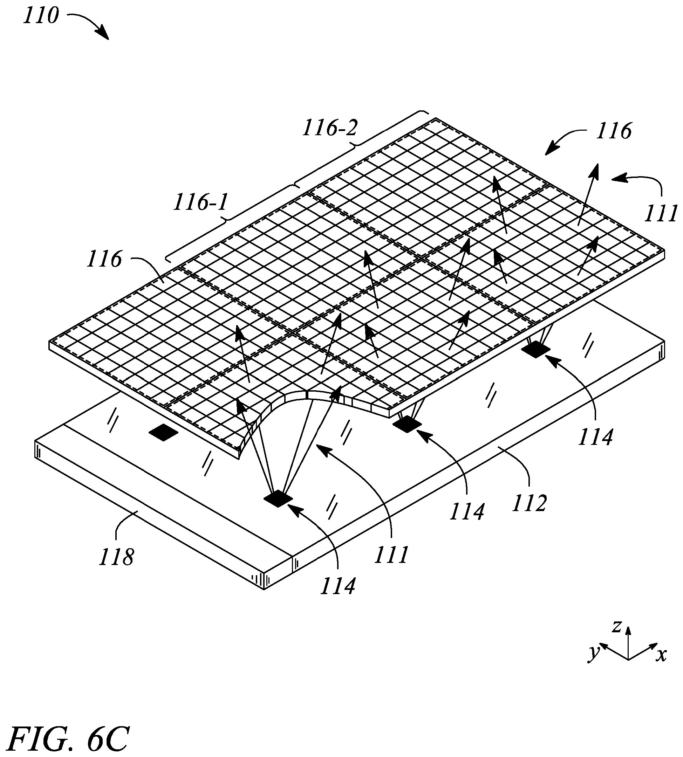

Figure 6A illustrates a cross sectional view of a multibeam element-based display 110 in an example, according to an embodiment consistent with the principles described herein. Figure 6B illustrates a plan view of a multibeam element-based display 110 in an example, according to an embodiment consistent with the principles described herein. Figure 6C illustrates a perspective view of a multibeam element-based display 110 in an example, according to an embodiment consistent with the principles described herein. The perspective view in Figure 6C is illustrated with a partial cut-away to facilitate discussion herein only.

The multibeam element-based display 110 illustrated in Figures 6A-6C is configured to provide a plurality of directional light beams 111 having different principal angular directions from one another (e.g., a light field). In particular, the provided plurality of directional light beams 111 are directed away from the multibeam element-based display 110 in different principal angular directions corresponding to respective view directions of the plurality of different views 104, according to various embodiments. Further, the directional light beams 111 are modulated (e.g., using light valves, as described below) to provide or display the multiview image. In some embodiments, the multiview image may include 3D content (e.g., virtual objects represented in different perspective views that appear as 3D objects when viewed by a user).

As illustrated in Figures 6A-6C, the multibeam element-based display 110 comprises a light guide 112. The light guide 112 may be a plate light guide, according to some embodiments. The light guide 112 is configured to guide light along a length of the light guide 112 as guided light 113. For example, the light guide 112 may include a dielectric material configured as an optical waveguide. The dielectric material may have a first refractive index that is greater than a second refractive index of a medium surrounding the dielectric optical waveguide. The difference in refractive indices is configured to facilitate total internal reflection of the guided light 113 according to one or more guided modes of the light guide 112, for example.

In particular, the light guide 112 may be a slab or plate optical waveguide comprising an extended, substantially planar sheet of optically transparent, dielectric material. The substantially planar sheet of dielectric material is configured to guide the guided light 113 using total internal reflection. According to various examples, the optically transparent material of the light guide 112 may include or be made up of any of a variety of dielectric materials including, but not limited to, one or more of various types of glass (e.g., silica glass, alkali-aluminosilicate glass, borosilicate glass, etc.) and substantially optically transparent plastics or polymers (e.g., poly(methyl methacrylate) or 'acrylic glass', polycarbonate, etc.). In some examples, the light guide 112 may further include a cladding layer (not illustrated) on at least a portion of a surface (e.g., one or both of the top surface and the bottom surface) of the light guide 112. The cladding layer may be used to further facilitate total internal reflection, according to some examples.

Further, according to some embodiments, the light guide 112 is configured to guide the guided light 113 according to total internal reflection at a non-zero propagation angle between a first surface 112' (e.g., 'front' surface or side) and a second surface 112" (e.g., 'back' surface or side) of the light guide 112. In particular, the guided light 113 propagates by reflecting or 'bouncing' between the first surface 112' and the second surface 112" of the light guide 112 at the non-zero propagation angle. In some embodiments, the guided light 113 comprises a plurality of guided light beams of different colors of light. The light beams of the plurality of guided light beams may be guided by the light guide 112 at respective ones of different color-specific, non-zero propagation angles. Note that the non-zero propagation angle is not illustrated for simplicity of illustration. However, a bold arrow depicting a propagation direction 115 illustrates a general propagation direction of the guided light 113 along the light guide length in Figure 6A.

As defined herein, a 'non-zero propagation angle' is an angle relative to a surface (e.g., the first surface 112' or the second surface 112") of the light guide 112. Further, the non-zero propagation angle is both greater than zero and less than a critical angle of total internal reflection within the light guide 112, according to various embodiments. For example, the non-zero propagation angle of the guided light 113 may be between about ten (10) degrees and about fifty (50) degrees or, in some examples, between about twenty (20) degrees and about forty (40) degrees, or between about twenty-five (25) degrees and about thirty-five (35) degrees. For example, the non-zero propagation angle may be about thirty (30) degrees. In other examples, the non-zero propagation angle may be about 20 degrees, or about 25 degrees, or about 35 degrees. Moreover, a specific non-zero propagation angle may be chosen (e.g., arbitrarily) for a particular implementation as long as the specific non-zero propagation angle is chosen to be less than the critical angle of total internal reflection within the light guide 112.

The guided light 113 in the light guide 112 may be introduced or coupled into the light guide 112 at the non-zero propagation angle (e.g., about 30-35 degrees). One or more of a lens, a mirror or similar reflector (e.g., a tilted collimating reflector), a diffraction grating, and a prism (not illustrated) may facilitate coupling light into an input end of the light guide 112 as the guided light 113 at the non-zero propagation angle, for example. Once coupled into the light guide 112, the guided light 113 propagates along the light guide 112 in a direction that may be generally away from the input end (e.g., illustrated by bold arrows pointing along an x-axis in Figure 6A).

Further, the guided light 113 or equivalently the guided light 113 produced by coupling light into the light guide 112 may be a collimated light beam, according to various embodiments. Herein, a 'collimated light' or 'collimated light beam' is generally defined as a beam of light in which rays of the light beam are substantially parallel to one another within the light beam (e.g., the guided light 113). Further, rays of light that diverge or are scattered from the collimated light beam are not considered to be part of the collimated light beam, by definition herein. In some embodiments, the multibeam element-based display 110 may include a collimator, such as, but not limited to, a lens, reflector or mirror, a diffraction grating, or a tapered light guide, configured to collimate the light, e.g., from a light source. In some embodiments, the light source comprises a collimator. The collimated light provided to the light guide 112 is a collimated guided light 113. The guided light 113 may be collimated according to or having a collimation factor σ, in various embodiments.

In some embodiments, the light guide 112 may be configured to 'recycle' the guided light 113. In particular, the guided light 113 that has been guided along the light guide length may be redirected back along that length in another propagation direction 115' that differs from the propagation direction 115. For example, the light guide 112 may include a reflector (not illustrated) at an end of the light guide 112 opposite to an input end adjacent to the light source. The reflector may be configured to reflect the guided light 113 back toward the input end as recycled guided light. Recycling guided light 113 in this manner may increase a brightness of the multibeam element-based display 110 (e.g., an intensity of the directional light beams 111) by making guided light available more than once, for example, to multibeam elements, described below.

In Figure 6A, a bold arrow indicating a propagation direction 115' of recycled guided light (e.g., directed in a negative x-direction) illustrates a general propagation direction of the recycled guided light within the light guide 112. Alternatively (e.g., as opposed to recycling guided light), guided light 113 propagating in the other propagation direction 115' may be provided by introducing light into the light guide 112 with the other propagation direction 115' (e.g., in addition to guided light 113 having the propagation direction 115).

As illustrated in Figures 6A-6C, the multibeam element-based display 110 further comprises a plurality or an array of multibeam elements 114 spaced apart from one another along the light guide length. In particular, the multibeam elements 114 of the array of multibeam elements 114 (or multibeam element array) are separated from one another by a finite space and represent individual, distinct elements along the light guide length. That is, by definition herein, the multibeam elements 114 of the multibeam element array are spaced apart from one another according to a finite (i.e., non-zero) inter-element distance (e.g., a finite center-to-center distance). Further the multibeam elements 114 of the multibeam element array generally do not intersect, overlap or otherwise touch one another, according to some embodiments. That is, each multibeam element 114 of the multibeam element array is generally distinct and separated from other ones of the multibeam elements 114.

According to some embodiments, the multibeam elements 114 of the multibeam element array may be arranged in either a one-dimensional (1D) array or two-dimensional (2D) array. For example, the array of multibeam elements 114 may be arranged as a linear 1D array. In another example, the array of multibeam elements 114 may be arranged as a rectangular 2D array or as a circular 2D array. Further, the array (i.e., 1D or 2D array) may be a regular or uniform array, in some examples. In particular, an inter-element distance (e.g., center-to-center distance or spacing) between the multibeam elements 114 may be substantially uniform or constant across the array. In other examples, the inter-element distance between the multibeam elements 114 may be varied one or both of across the array and along the length of the light guide 112.

A multibeam element 114 of the multibeam element array is configured to couple or scatter out a portion of the guided light 113 as the plurality of directional light beams 111. In particular, Figures 6A and 6C illustrate the directional light beams 111 as a plurality of diverging arrows depicted as being directed way from the first (or front) surface 112' of the light guide 112. Further, a size of the multibeam element 114 is comparable to a size of a view pixel (or equivalently a size of a light valve 116, described below) in a multiview pixel, of the multibeam element-based display 110, according to various embodiments.

Herein, the 'size' may be defined in any of a variety of manners to include, but not be limited to, a length, a width or an area. For example, the size of a view pixel may be a length thereof and the comparable size of the multibeam element 114 may also be a length of the multibeam element 114. In another example, size may refer to an area such that an area of the multibeam element 114 may be comparable to an area of the view pixel.

In some embodiments, the size of the multibeam element 114 is comparable to the view pixel size such that the multibeam element size is between about fifty percent (50%) and about two hundred percent (200%) of the view pixel size. For example, if the multibeam element size is denoted 's' and the view pixel size is denoted *'S'* (e.g., as illustrated in Figure 6A), then the multibeam element size s may be given by equation (2) as $\frac{1}{2} S \leq s \leq 2 S$ In other examples, the multibeam element size is greater than about sixty percent (60%) of the view pixel size, or about seventy percent (70%) of the view pixel size, or greater than about eighty percent (80%) of the view pixel size, or greater than about ninety percent (90%) of the view pixel size, and the multibeam element is less than about one hundred eighty percent (180%) of the view pixel size, or less than about one hundred sixty percent (160%) of the view pixel size, or less than about one hundred forty percent (140%) of the view pixel size, or less than about one hundred twenty percent (114%) of the view pixel size. For example, by 'comparable size', the multibeam element size may be between about seventy-five percent (75%) and about one hundred fifty (150%) of the view pixel size. In another example, the multibeam element 114 may be comparable in size to the view pixel where the multibeam element size is between about one hundred twenty-five percent (125%) and about eighty-five percent (85%) of the view pixel size. According to some embodiments, the comparable sizes of the multibeam element 114 and the view pixel (or light valve 116) may be chosen to reduce, or in some examples to minimize, dark zones between views of the multiview image, while at the same time reducing, or in some examples minimizing, an overlap between different views of the multiview image.

As illustrated in Figures 6A-6C, the multibeam element-based display 110 further comprises an array of light valves 116 (or light valve array). The array of light valves 116 is configured to modulate the directional light beams 111 of the directional light beam plurality. In particular, the light valve array may be configured to modulate the directional light beams 111 as or to provide an image being displayed by the multibeam element-based display 110, such as the multiview image. In Figure 6C, the array of light valves 116 is partially cut-away to allow visualization of the light guide 112 and the multibeam element 114 underlying the light valve array.

Further, different ones of the directional light beams 111 having different principal angular directions are configured to pass through and thus be modulated by different ones of the light valves 116 in the light valve array. Further, as illustrated, a light valve 116 of the array corresponds to a view pixel, while a set of the light valves 116 of the light valve array corresponds to a multiview pixel of the multibeam element-based display 110. In particular, a different set of light valves 116 of the light valve array is configured to receive and modulate the directional light beams 111 from different ones of the multibeam elements 114. Thus, as illustrated, there is one unique set of light valves 116 for each multibeam element 114. In various embodiments, any of a variety of different types of light valves may be employed as the light valves 116 of the light valve array including, but not limited to, one or more of liquid crystal light valves, electrophoretic light valves, and light valves based on or employing electrowetting.

Figure 6A illustrates a first light valve set 116-1 configured to receive and modulate the directional light beams 111 from a first multibeam element 114-1, while a second light valve set 116-2 is configured to receive and modulate the directional light beams 111 from a second multibeam element 114-2, as illustrated. Thus, each of the light valve sets (e.g., the first and second light valve sets 116-1, 116-2) in the light valve array corresponds, respectively, to a different multiview pixel, with individual light valves 116 of the light valve sets corresponding to the view pixels of the respective multiview pixels, as illustrated in Figure 6A.

Note that, in Figure 6A, the size of a view pixel may correspond to an actual size of a light valve 116 in the light valve array. In other examples, the view pixel size or equivalently the light valve size may be defined as a distance (e.g., a center-to-center distance) between adjacent light valves 116 of the light valve array. For example, the light valves 116 may be smaller than the center-to-center distance between the light valves 116 in the light valve array. The view pixel or light valve size may be defined as either the size of the light valve 116 or a size corresponding to the center-to-center distance between the light valves 116, for example.

In some embodiments, a relationship between the multibeam elements 114 of the multibeam element array and corresponding multiview pixels (e.g., sets of light valves 116) may be a one-to-one relationship. That is, there may be an equal number of multiview pixels and multibeam elements 114. Figure 6B explicitly illustrates by way of example the one-to-one relationship where each multiview pixel comprising a different set of light valves 116 is illustrated as surrounded by a dashed line. In other embodiments (not illustrated), the number of multiview pixels and multibeam elements 114 may differ from one another.

In some embodiments, an inter-element distance (e.g., center-to-center distance) between a pair of adjacent multibeam elements 114 of the multibeam element array may be equal to an inter-pixel distance (e.g., a center-to-center distance) between a corresponding adjacent pair of multiview pixels, e.g., represented by light valve sets. For example, in Figures 6A-6B, a center-to-center distance d between the first multibeam element 114-1 and the second multibeam element 114-2 is substantially equal to a center-to-center distance D between the first light valve set 116-1 and the second light valve set 116-2, as illustrated. In other embodiments (not illustrated), the relative center-to-center distances of pairs of multibeam elements 114 and corresponding light valve sets may differ, e.g., the multibeam elements 114 may have an inter-element spacing (i.e., center-to-center distance d) that is one of greater than or less than a spacing (i.e., center-to-center distance D) between light valve sets representing multiview pixels.

In some embodiments, a shape of the multibeam element 114 may be analogous to a shape of the multiview pixel or equivalently, a shape of the set (or 'subarray') of the light valves 116 corresponding to the multiview pixel. For example, the multibeam element 114 may have a square shape and the multiview pixel (or an arrangement of a corresponding set of light valves 116) may be substantially square. In another example, the multibeam element 114 may have a rectangular shape, i.e., may have a length or longitudinal dimension that is greater than a width or transverse dimension. In this example, the multiview pixel (or equivalently the arrangement of the set of light valves 116) corresponding to the multibeam element 114 may have an analogous rectangular shape. Figure 6B illustrates a top or plan view of square-shaped multibeam elements 114 and corresponding square-shaped multiview pixels comprising square sets of light valves 116. In yet other examples (not illustrated), the multibeam elements 114 and the corresponding multiview pixels have various shapes including or at least approximated by, but not limited to, a triangular shape, a hexagonal shape, and a circular shape.

Further (e.g., as illustrated in Figure 6A), each multibeam element 114 may be configured to provide directional light beams 111 to one and only one multiview pixel, according to some embodiments. In particular, for a given one of the multibeam elements 114, the directional light beams 111 having different principal angular directions corresponding to the different views 104 of the multiview image are substantially confined to a single corresponding multiview pixel and the view pixels thereof, i.e., a single set of light valves 116 corresponding to the multibeam element 114 (e.g., as illustrated in Figure 6A). As such, each multibeam element 114 of the multibeam element-based display 110 provides a corresponding set of directional light beams 111 that has a set of the different principal angular directions corresponding to the different views 104 of the multiview image (i.e., the set of directional light beams 111 contains a light beam having a direction corresponding to each of the different view directions).

According to various embodiments, the multibeam elements 114 may comprise any of a number of different structures configured to couple out a portion of the guided light 113. For example, the different structures may include, but are not limited to, diffraction gratings, micro-reflective elements, micro-refractive elements, or various combinations thereof. In some embodiments, the multibeam element 114 comprising a diffraction grating is configured to diffractively couple out the guided light portion as the plurality of directional light beams 111 having the different principal angular directions. In other embodiments, the multibeam element 114 comprising a micro-reflective element is configured to reflectively couple out the guided light portion as the plurality of directional light beams 111, or the multibeam element 114 comprising a micro-refractive element is configured to couple out the guided light portion as the plurality of directional light beams 111 by or using refraction (i.e., refractively couple out the guided light portion).

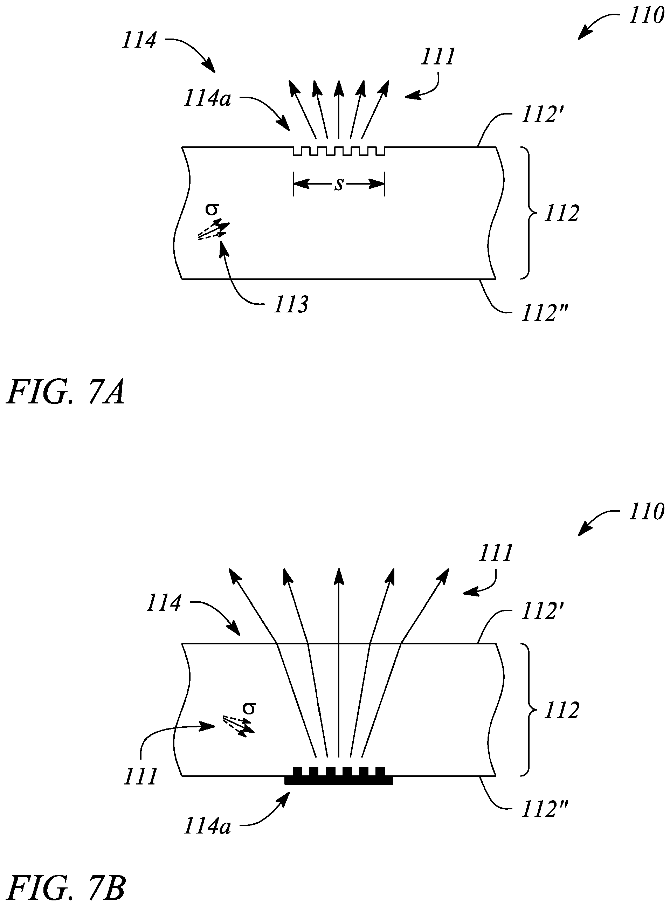

Figure 7A illustrates a cross sectional view of a portion of a multibeam element-based display 110 including a multibeam element 114 in an example, according to an embodiment consistent with the principles described herein. Figure 7B illustrates a cross sectional view of a portion of a multibeam element-based display 110 including a multibeam element 114 in an example, according to another embodiment consistent with the principles described herein. In particular, Figures 7A-7B illustrate the multibeam element 114 of the multibeam element-based display 110 comprising a diffraction grating 114a. The diffraction grating 114a is configured to diffractively couple out a portion of the guided light 113 as the plurality of directional light beams 111. The diffraction grating 114a comprises a plurality of diffractive features spaced apart from one another by a diffractive feature spacing or a diffractive feature or grating pitch configured to provide diffractive coupling out of the guided light portion. According to various embodiments, the spacing or grating pitch of the diffractive features in the diffraction grating 114a may be sub-wavelength (i.e., less than a wavelength of the guided light).

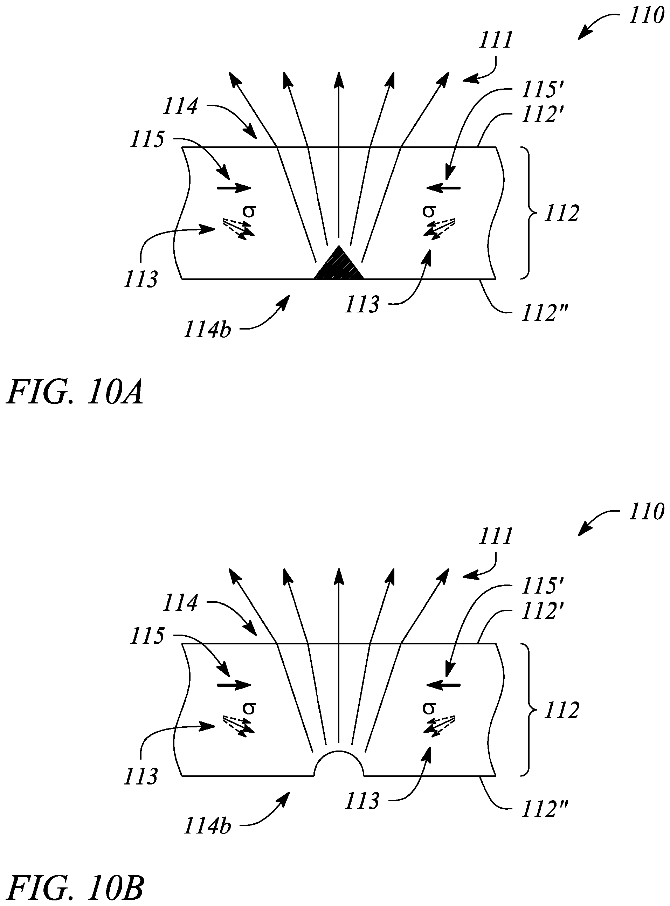

In some embodiments, the diffraction grating 114a of the multibeam element 114 may be located at or adjacent to a surface of the light guide 112. For example, the diffraction grating 114a may be at or adjacent to the first surface 112' of the light guide 112, as illustrated in Figure 7A. The diffraction grating 114a at light guide first surface 112' may be a transmission mode diffraction grating configured to diffractively couple out the guided light portion through the first surface 112' as the directional light beams 111. In another example, as illustrated in Figure 7B, the diffraction grating 114a may be located at or adjacent to the second surface 112" of the light guide 112. When located at the second surface 112", the diffraction grating 114a may be a reflection mode diffraction grating. As a reflection mode diffraction grating, the diffraction grating 114a is configured to both diffract the guided light portion and reflect the diffracted guided light portion toward the first surface 112' to exit through the first surface 112' as the diffractively directional light beams 111. In other embodiments (not illustrated), the diffraction grating may be located between the surfaces of the light guide 112, e.g., as one or both of a transmission mode diffraction grating and a reflection mode diffraction grating. Note that, in some embodiments described herein, the principal angular directions of the directional light beams 111 may include an effect of refraction due to the directional light beams 111 exiting the light guide 112 at a light guide surface. For example, Figure 7B illustrates refraction (i.e., bending) of the directional light beams 111 due to a change in refractive index as the directional light beams 111 cross the first surface 112', by way of example and not limitation. Also see Figures 10A and 10B, described below.

According to some embodiments, the diffractive features of the diffraction grating 114a may comprise one or both of grooves and ridges that are spaced apart from one another. The grooves or the ridges may comprise a material of the light guide 112, e.g., may be formed in a surface of the light guide 112. In another example, the grooves or the ridges may be formed from a material other than the light guide material, e.g., a film or a layer of another material on a surface of the light guide 112.

In some embodiments, the diffraction grating 114a of the multibeam element 114 is a uniform diffraction grating in which the diffractive feature spacing is substantially constant or unvarying throughout the diffraction grating 114a. In other embodiments, the diffraction grating 114a may be a chirped diffraction grating. By definition, the 'chirped' diffraction grating is a diffraction grating exhibiting or having a diffraction spacing of the diffractive features (i.e., the grating pitch) that varies across an extent or length of the chirped diffraction grating. In some embodiments, the chirped diffraction grating may have or exhibit a 'chirp' of or change in the diffractive feature spacing that varies linearly with distance. As such, the chirped diffraction grating is a 'linearly chirped' diffraction grating, by definition. In other embodiments, the chirped diffraction grating of the multibeam element 114 may exhibit a non-linear chirp of the diffractive feature spacing. Various non-linear chirps may be used including, but not limited to, an exponential chirp, a logarithmic chirp or a chirp that varies in another, substantially non-uniform or random but still monotonic manner. Non-monotonic chirps such as, but not limited to, a sinusoidal chirp or a triangle or sawtooth chirp, may also be employed. Combinations of any of these types of chirps may also be employed.

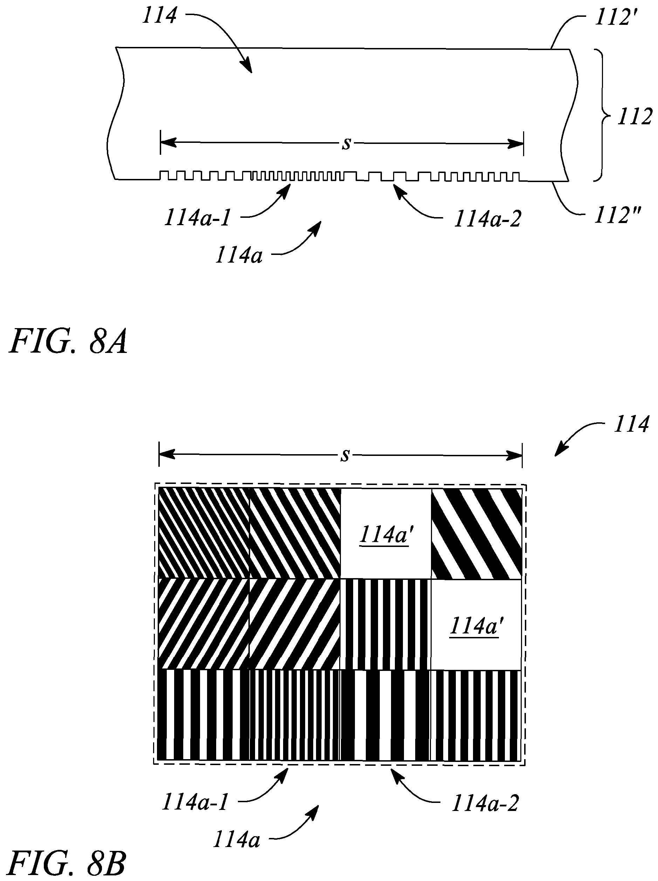

In some embodiments, the diffraction grating 114a may comprise a plurality of diffraction gratings or equivalently a plurality of sub-gratings. Figure 8A illustrates a cross sectional view of a diffraction grating 114a comprising a plurality of sub-gratings in an example, according to an embodiment consistent with the principles described herein. Figure 8B illustrates a plan view of the diffraction grating 114a illustrated in Figure 8A in an example, according to an embodiment consistent with the principles described herein. The cross sectional view in Figure 8A may represent a cross section taken from left to right through a bottom row of sub-gratings of the diffraction grating 114a illustrated in Figure 8B, for example. As illustrated in Figures 8A and 8B, the plurality of sub-gratings comprises a first sub-grating 114a-1 and a second sub-grating 114a-2 within the diffraction grating 114a of the multibeam element 114 on a surface (e.g., a second surface 112", as illustrated) of the light guide 112. A size s of the multibeam element 114 is illustrated in both Figure 8A and 8B, while a boundary of the multibeam element 114 is illustrated in Figure 8B using a dashed line.

According to some embodiments, a differential density of sub-gratings within the diffraction grating 114a between different multibeam elements 114 of the multibeam element plurality may be configured to control a relative intensity of the plurality of directional light beams 111 diffractively scattered out by respective different multibeam elements 114. In other words, the multibeam elements 114 may have different densities of diffraction gratings 114a therein and the different densities (i.e., the differential density of the sub-gratings) may be configured to control the relative intensity of the plurality of directional light beams 111. In particular, a multibeam element 114 having fewer sub-gratings within the diffraction grating 114a may produce a plurality of directional light beams 111 having a lower intensity (or beam density) than another multibeam element 114 having relatively more sub-gratings. The differential density of sub-gratings may be provided using locations such as location 114a' illustrated in Figure 8B within the multibeam element 114 that lack or are without a sub-grating, for example.

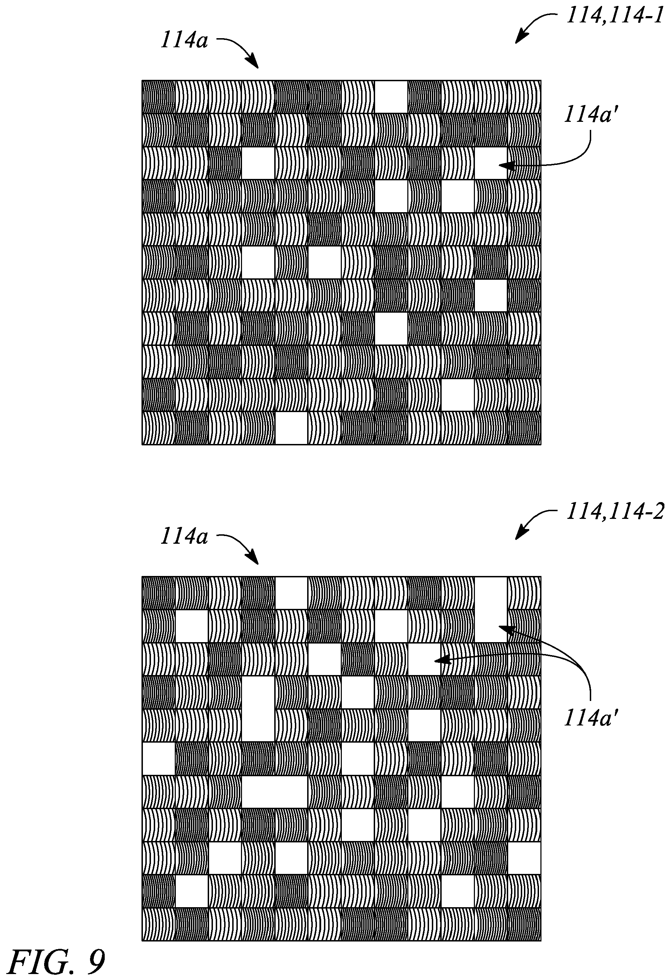

Figure 9 illustrates a plan view of a pair of multibeam elements 114 in an example, according to an embodiment consistent with the principles described herein. As illustrated, a first multibeam element 114-1 of the pair has a higher density of sub-gratings within the diffraction grating 114a than are present in a second multibeam element 114-2 of the pair. In particular, the second multibeam element 114-2 has a diffraction grating 114a with fewer sub-gratings and more locations 114a' without a sub-grating than the first multibeam element 114-1. In some embodiments, the higher density of sub-gratings in the first multibeam element 114-1 may provide a plurality of directional light beams having a higher intensity than the intensity of the plurality of directional light beams provided by the second multibeam element 114-2. The higher and lower intensities of the respective directional light beam pluralities provided by the differential sub-grating densities illustrated in Figure 9 may be used to compensate for a change in optical intensity of the guided light within the light guide as a function of propagation distance, according to some embodiments. By way of example and not limitation, Figure 9 also illustrates diffraction gratings 114a with sub-gratings having curved diffractive features.

Figure 10A illustrates a cross sectional view of a portion of a multibeam element-based display 110 including a multibeam element 114 in an example, according to another embodiment consistent with the principles described herein. Figure 10B illustrates a cross sectional view of a portion of a multibeam element-based display 110 including a multibeam element 114 in an example, according to another embodiment consistent with the principles described herein. In particular, Figures 10A and 10B illustrate various embodiments of the multibeam element 114 comprising a micro-reflective element. Micro-reflective elements used as or in the multibeam element 114 may include, but are not limited to, a reflector that employs a reflective material or layer thereof (e.g., a reflective metal) or a reflector based on total internal reflection (TIR). According to some embodiments (e.g., as illustrated in Figures 10A-10B), the multibeam element 114 comprising the micro-reflective element may be located at or adjacent to a surface (e.g., the second surface 112") of the light guide 112. In other embodiments (not illustrated), the micro-reflective element may be located within the light guide 112 between the first and second surfaces 112', 112".

For example, Figure 10A illustrates the multibeam element 114 comprising a micro-reflective element 114b having reflective facets (e.g., a 'prismatic' micro-reflective element) located adjacent to the second surface 112" of the light guide 112. The facets of the illustrated prismatic micro-reflective element 114b are configured to reflect (i.e., reflectively scatter) the portion of the guided light 113 out of the light guide 112 as directional light beams 111. The facets may be slanted or tilted (i.e., have a tilt angle) relative to a propagation direction of the guided light 113 to reflect the guided light portion out of light guide 112, for example. The facets may be formed using a reflective material within the light guide 112 (e.g., as illustrated in Figure 10A) or may be surfaces of a prismatic cavity in the second surface 112", according to various embodiments. When a prismatic cavity is employed, either a refractive index change at the cavity surfaces may provide reflection (e.g., TIR reflection) or the cavity surfaces that form the facets may be coated by a reflective material to provide reflection, in some embodiments.

In another example, Figure 10B illustrates the multibeam element 114 comprising a micro-reflective element 114b having a substantially smooth, curved surface such as, but not limited to, a semi-spherical micro-reflective element 114b. A specific surface curve of the micro-reflective element 114b may be configured to reflect the guided light portion in different directions depending on a point of incidence on the curved surface with which the guided light 113 makes contact, for example. As illustrated in Figures 10A and 10B, the guided light portion that is reflectively scattered out of the light guide 112 exits or is emitted from the first surface 112', by way of example and not limitation. As with the prismatic micro-reflective element 114b in Figure 10A, the micro-reflective element 114b in Figure 10B may be either a reflective material within the light guide 112 or a cavity (e.g., a semi-circular cavity) formed in the second surface 112", as illustrated in Figure 10B by way of example and not limitation. Figures 10A and 10B also illustrate the guided light 113 having two propagation directions 115, 115' (i.e., illustrated as bold arrows), by way of example and not limitation. Using two propagation directions 115, 115' may facilitate providing the plurality of directional light beams 111 with symmetrical principal angular directions, for example.

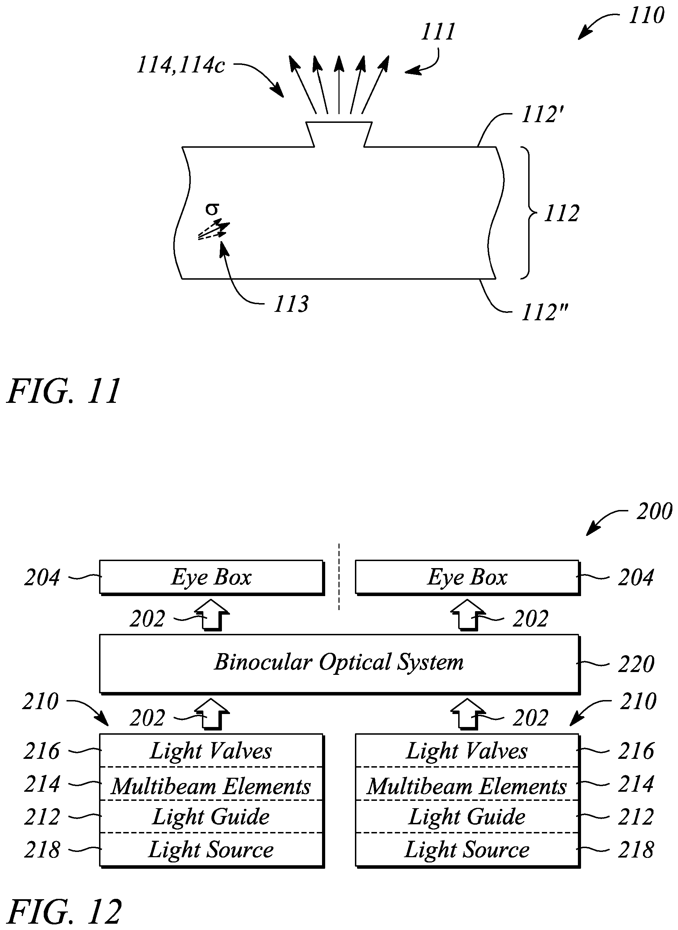

Figure 11 illustrates a cross sectional view of a portion of a multibeam element-based display 110 including a multibeam element 114 according to the invention. In particular, Figure 11 illustrates a multibeam element 114 comprising a micro-refractive element 114c. The micro-refractive element 114c is configured to refractively couple or scatter out a portion of the guided light 113 from the light guide 112. That is, the micro-refractive element 114c is configured to employ refraction (e.g., refractive coupling as opposed to diffraction or reflection) to couple or scatter out the guided light portion from the light guide 112 as the directional light beams 111, as illustrated in Figure 11. The micro-refractive element 114c has an inverse prismatic shape (e.g., as illustrated in Figure 11). According to various embodiments, the micro-refractive element 114c may extend or protrude out of a surface (e.g., the first surface 112') of the light guide 112, as illustrated, or may be a cavity in the surface (not illustrated). Further, the micro-refractive element 114c may comprise a material of the light guide 112, in some embodiments. In other embodiments, the micro-refractive element 114c may comprise another material adjacent to, and in some examples, in contact with the light guide surface.

Referring again to Figure 6A, the multibeam element-based display 110 may further comprise a light source 118. According to various embodiments, the light source 118 is configured to provide the light to be guided within light guide 112. In particular, the light source 118 may be located adjacent to an entrance surface or end (input end) of the light guide 112. In various embodiments, the light source 118 may comprise substantially any source of light (e.g., optical emitter) including, but not limited to, one or more light emitting diodes (LEDs) or a laser (e.g., laser diode). In some embodiments, the light source 118 may comprise an optical emitter configured produce a substantially monochromatic light having a narrowband spectrum denoted by a particular color. In particular, the color of the monochromatic light may be a primary color of a particular color space or color model (e.g., a red-green-blue (RGB) color model). In other examples, the light source 118 may be a substantially broadband light source configured to provide substantially broadband or polychromatic light. For example, the light source 118 may provide white light. In some embodiments, the light source 118 may comprise a plurality of different optical emitters configured to provide different colors of light. The different optical emitters may be configured to provide light having different, color-specific, non-zero propagation angles of the guided light corresponding to each of the different colors of light.

In some embodiments, the light source 118 may further comprise a collimator (not illustrated). The collimator may be configured to receive substantially uncollimated light from one or more of the optical emitters of the light source 118. The collimator is further configured to convert the substantially uncollimated light into collimated light. In particular, the collimator may provide collimated light having the non-zero propagation angle and being collimated according to a predetermined collimation factor, according to some embodiments. Moreover, when optical emitters of different colors are employed, the collimator may be configured to provide the collimated light having one or both of different, color-specific, non-zero propagation angles and having different color-specific collimation factors. The collimator is further configured to communicate the collimated light beam to the light guide 112 to propagate as the guided light 113, described above.

In accordance with some embodiments of the principles described herein, a near-eye binocular display system is provided. Figure 12 illustrates a block diagram of a near-eye binocular display system 200 in an example, according to an embodiment consistent with the principles described herein. The near-eye binocular display system 200 is configured to provide a multiview images 202 as a stereoscopic pair of images representing a three-dimensional (3D) scene and to relay the stereoscopic pair of images to a corresponding pair of eye boxes 204 for viewing by a user. According to various embodiments, the eye boxes 204 of the pair are laterally displaced from one another to correspond with locations of the user's eyes. In particular, the user may comfortably and naturally view the multiview images 202 of the stereoscopic image pair at the pair of laterally displaced eye boxes 204. Further, the multiview images 202 of the stereoscopic image pair may both provide a 3D experience as well as address various convergence-accommodation issues often associated with near-eye stereoscopic displays, according to some embodiments.

As illustrated in Figure 12, the near-eye binocular display system 200 comprises a pair of multibeam element-based displays 210. According to various embodiments, each multibeam element-based display 210 is configured to provide a different multiview image 202 of the stereoscopic image pair representing the 3D scene. In some embodiments, one or both of multibeam element-based displays 210 of the pair of multibeam element-based displays 210 may be substantially similar to the multibeam element-based display 110, described above with respect to the near-eye display 100.

In particular, as illustrated, the multibeam element-based displays 210 each comprise a light guide 212 and a multibeam element array 214 (e.g., as illustrated). The light guide 212 is configured to guide light as guided light. The multibeam element array 214 is configured to scatter out a portion of the guided light as a plurality of directional light beams having principal angular directions corresponding view directions of the different multiview images. In some embodiments, the light guide 212 may be substantially similar to the light guide 112 and the array of multibeam elements 214 may be substantially similar to the array of multibeam elements 114 of the multibeam element-based display 110. In particular, a multibeam element of the multibeam element array 214 may be located at or adjacent to a surface of the light guide 212. Further, in some embodiments, the multibeam element of the multibeam element array 214 may comprise one or more of a diffraction grating, a micro-reflective element and a micro-refractive element optically connected to the light guide to scatter out the portion of the guided light.

The multibeam element-based display 210 illustrated in Figure 12 further comprises a light valve array 216. The light valve array 216 is configured to selectively modulate directional light beams of the directional light beam plurality. The selectively modulated directional light beams may represent the different views of the provided multiview image, according to various embodiments. In some embodiments, the light valve array 216 may be substantially similar to the array of light valves 116 of the above-described multibeam element-based display 110. For example, a light valve of the light valve array 216 may comprise a liquid crystal light valve. In other embodiments, the light valve array 216 may comprise another light valve including, but not limited to, an electrowetting light valve, an electrophoretic light valve, a combination thereof, or a combination of liquid crystal light valves and another light valve type, for example. In some embodiments, a size of the multibeam element of the multibeam element array 214 is comparable to a size of a light valve in the light valve array 216 of the multibeam element-based display 210.

According to some embodiments, each of the provided multiview images 202 of the stereoscopic image pair provided by the pair of multibeam element-based displays 210 comprises a plurality of different views of the 3D scene. The different views may represent different perspectives of the 3D scene, for example. Further, in various embodiments, the directional light beams of the directional light beam plurality may have different principal angular directions corresponding to view directions of the multiview images.

The near-eye binocular display system 200 illustrated in Figure 12 further comprises a binocular optical system 220. The binocular optical system 220 is configured to separately relay the different multiview images 202 of the stereoscopic image pair provided by the pair of multibeam element-based displays 210 to a corresponding pair of eye boxes 204. The eye boxes 204 are laterally displaced from one another, according to various embodiments. As noted above, the lateral displacement of the eye boxes 204 may facilitate viewing by the user, for example. A vertical dashed line between the eye boxes 204 illustrated in Figure 12 depicts lateral displacement.

In some embodiments, the binocular optical system 220 may be substantially similar to the optical system 120 of the near-eye display 100, albeit arranged in a binocular configuration. In particular, the binocular optical system 220 may be configured to relay the plurality of different views to a corresponding plurality of different locations within the eye boxes 204. In addition, the different locations within the eye box 204 are configured to provide depth focus cues to a user of the near-eye binocular display system 200. In particular, the depth focus cues may correspond to binocular disparity between the provided multiview images 202 of the stereoscopic image pair, according to various embodiments.

Further, according to some embodiments, the binocular optical system 220 may comprise a first freeform prism and a second freeform prism (not illustrated in Figure 12). The first freeform prism may be configured to relay a first multiview image 202 provided by a first multibeam element-based display 210 of the multibeam element-based display pair to a first eye box 204 of the eye box pair. Similarly, the second freeform prism may be configured to relay a second multiview image 202 provided by a second multibeam element-based display 210 of the multibeam element-based display pair to a second eye box 204 of the eye box pair. In other embodiments (not illustrated), the binocular optical system 220 may comprise a pair of magnifiers (e.g., a pair of simple magnifiers substantially similar to the simple magnifier 122, described above).

In some embodiments, the near-eye binocular display system 200 is configured to be a virtual reality display system. In particular, the provided different multiview images 202 of the stereoscopic image pair may be configured to supplant a binocular view of a physical environment, at least within the eye boxes 204. In other embodiments, the near-eye binocular display system 200 illustrated in Figure 12 may be configured to be an augmented reality display system. When configured as an augmented reality display system, the provided different multiview images 202 of the stereoscopic image pair may augment, but generally do not supplant, the physical environment view within the eye boxes 204, for example. That is, the near-eye binocular display system 200 configured as an augmented reality display system provides to a user an optical superposition of the stereoscopic image pair and a view of the physical environment. Further, when configured as an augmented reality display system, the binocular optical system 220 may further comprise a pair of freeform compensation lenses. The freeform compensation lenses may be configured to provide an image of a physical environment to the pair of eye boxes 204, according to various embodiments.

According to some embodiments, as illustrated in Figure 12, the multibeam element-based display 210 may further comprise a light source 218. The light source 218 is configured to provide light to the light guide 212. In some embodiments, the light source 218 may include an optical collimator configured to collimate the light provided by the light source 218. In some embodiments, the guided light provided by the light source 218 has a predetermined collimation factor. According to some embodiments, the light source 218 may be substantially similar to the light source 118 of the multibeam element-based display 110, described above with respect to the near-eye display 100.

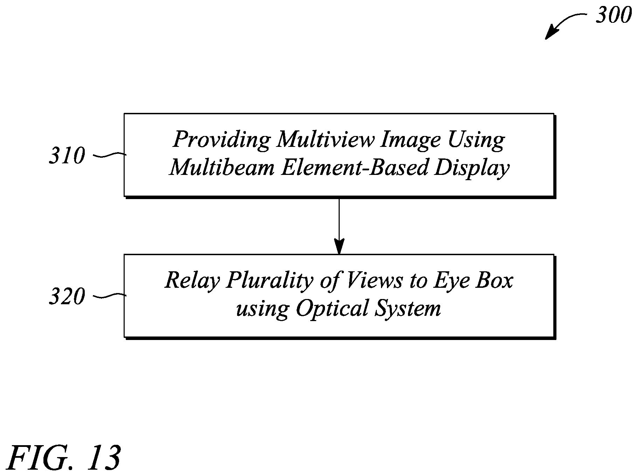

In accordance with other embodiments of the principles described herein, a method of near-eye display operation is provided. Figure 13 illustrates a flow chart of a method 300 of near-eye display operation in an example, according to an embodiment consistent with the principles described herein. As illustrated in Figure 13, the method 300 of near-eye display operation comprises providing 310 a multiview image having a plurality of different views using a multibeam element-based display. In some embodiments, the multibeam element-based multiview display used in providing 310 a multiview image may be substantially similar to the multibeam element-based display 110, described above with respect to the near-eye display 100.

In particular, according to various embodiments, the multibeam element-based display comprises an array of multibeam elements and an array of light valves. The array of multibeam elements provide a plurality of directional light beams having directions corresponding to respective view directions of the plurality of different views. Further, the array of light valves modulate the plurality of directional light beams as the multiview image.

In some embodiments, the array of multibeam elements provide the plurality of directional light beams by scattering out a portion of guided light from a light guide using the array of multibeam elements to produce the plurality of directional light beams having different principal angular directions. In some embodiments, scattering out the portion of guided light comprises diffractively scattering out the portion of guided light using a multibeam element of the array of multibeam elements comprising a diffraction grating. In some embodiments, scattering out the portion of guided light comprises reflectively scattering out the guided light portion using a multibeam element of the array of multibeam elements comprising a micro-reflective element. In some embodiments, scattering out the portion of guided light comprises refractively scattering out the guided light portion using a multibeam element of the array of multibeam elements comprising a micro-refractive element.

As illustrated in Figure 13, the method 300 of near-eye display operation further comprises relaying 320 the plurality of different views of the multiview image to an eye box using an optical system. In some embodiments, the optical system may be substantially similar to the optical system 120 of the near-eye display 100, described above. In particular, according to some embodiments, relaying 320 the plurality of different views of an image relays different ones of the different views to different locations within the eye box to afford depth focus cues to a user viewing the image in the eye box. The depth focus cues may facilitate image accommodation by a user's eye, for example.

In some embodiments, the relayed multiview image may comprise a three-dimensional (3D) image and the different views of the plurality of different views may represent different perspective views of the multiview image. In some embodiments, the relayed image is a multiview image of a stereoscopic pair of images. Further, the plurality of different views of the image may include at least four different views, in some examples. In some embodiments, relaying 320 the plurality of different views of an image comprises magnifying the image to provide a virtual image located at a distance from the eye box corresponding to a normal accommodation range of an eye of a user. In some embodiments, relaying 320 the plurality of different views provides one or both of an augmented reality display and a virtual reality display of the multiview image.

Thus, there have been described examples and embodiments of a near-eye display, a binocular near-eye display system and a method of near-eye display operation that employ a multibeam element-based display to provide a plurality of different views of an image. It should be understood that the above-described examples are merely illustrative of some of the many specific examples that represent the principles described herein. Clearly, those skilled in the art can readily devise numerous other arrangements without departing from the scope as defined by the following claims.

## Claims

1. A near-eye display (100) comprising:
a multibeam element-based display (110) configured to provide a plurality of different views of a multiview image, the multibeam element-based display comprising:
a light guide (112) configured to guide light along a length of the light guide as guided light (113);
an array of multibeam elements (114) configured to provide a plurality of directional light beams (111) having directions corresponding to respective view directions of the plurality of different views, a multibeam element of the multibeam element array being configured to scatter out from the light guide a portion of the guided light as directional light beams of the plurality of directional light beams;
and an array of light valves (116) configured to modulate the plurality of directional light beams to provide the multiview image; and
an optical system (120) configured to relay the plurality of different views of the multiview image to a corresponding plurality of different locations within an eye box (102) at an output of the near-eye display;
**characterized in that** the multibeam element comprises a micro-refractive element having an inverse prismatic shape.

2. The near-eye display of Claim 1, wherein the corresponding plurality of different locations within the eye box being configured to impart focus depth cues to a user of the near-eye display, and wherein different views of the plurality of different views represent different perspective views of the multiview image.

3. The near-eye display of Claim 1, wherein the plurality of different views of the multiview image includes at least four different views.

4. The near-eye display of Claim 1, wherein the plurality of different views has a total angular extent and the optical system has an input aperture, the total angular extent being configured to substantially correspond to a size of the input aperture.

5. The near-eye display of Claim 1, wherein the optical system comprises a simple magnifier (122) configured to provide a virtual image of the multiview image at a distance from the eye box corresponding to a normal accommodation range of an eye of a user.

6. The near-eye display of Claim 1, wherein both of the multibeam element-based display and the optical system are located within a field-of-view (FOV) of a user to substantially block a portion of the FOV, the near-eye display being a virtual reality display configured to supplant a view of a physical environment with the multiview image within the blocked FOV portion.

7. The near-eye display of Claim 1, wherein the multibeam element-based display is located outside of a field-of-view (FOV) of a user, the optical system being located within the FOV, the near-eye display being an augmented reality display configured to augment a view of a physical environment in the FOV with the multiview image.

8. The near-eye display of Claim 1, wherein the optical system comprises a freeform prism (124).

9. The near-eye display of Claim 1, wherein the optical system further comprises a freeform compensation lens (126).

10. The near-eye display of Claim 1, wherein the multibeam element-based display further comprises a light source (118) optically coupled to an input of the light guide, the light source being configured to provide light to be guided as the guided light one or both of having a non-zero propagation angle and being collimated according to a predetermined collimation factor.

11. A near-eye binocular display system (200) comprising a pair (210) of the near-eye display of Claim 1, wherein a first near-eye display of the pair is configured to provide a first plurality of different views of a first multiview image (202) to a first eye box (204), a second near-eye display of the pair being configured to provide a second plurality of different views of a second multiview image (202) to a second eye box (204), the second eye box being laterally offset from the first eye box, the first and second multiview images representing a stereoscopic pair of images.

12. The near-eye binocular display system of Claim 11, wherein the binocular optical system is configured to relay a plurality of different views of each of the multiview images to a corresponding plurality of different locations within the eye boxes, the different locations of the different views within the eye boxes being configured to provide depth focus cues to a user of the near-eye binocular display system, the depth focus cues corresponding to binocular disparity between the different multiview images of the stereoscopic image pair.

13. A method (300) of near-eye display operation, the method comprising:
providing a multiview image having a plurality of different views using a multibeam element-based multiview display (310) comprising an array of multibeam elements and an array of light valves, the array of multibeam elements providing a plurality of directional light beams having directions corresponding to respective view directions of the plurality of different views and the array of light valves modulating the plurality of directional light beams as the multiview image; and
relaying the plurality of different views of the multiview image to an eye box using an optical system (320),
wherein the array of multibeam elements provide the plurality of directional light beams by scattering out a portion of guided light from a light guide using the array of multi beam elements to produce the plurality of directional light beams having different principal angular directions, and wherein the multibeam element comprises a micro-refractive element having an inverse prismatic shape.

14. The method of claim 13 or the near-eye display of claim 1, wherein a size of the multibeam element is comparable to a size of a light valve of the light valve array

## Patentansprüche

1. Augennahe Anzeige (100), umfassend:
eine Mehrstrahlelement-basierte Anzeige (110), die dazu ausgelegt ist, eine Vielzahl von unterschiedlichen Ansichten eines Mehrfachansichtbildes bereitzustellen, wobei die Mehrstrahlelement-basierte Anzeige Folgendes umfasst:
einen Lichtleiter (112), der zum Leiten von Licht entlang einer Länge des Lichtleiters als geleitetes Licht (113) ausgelegt ist;
ein Array von Mehrstrahlelementen (114), das dazu ausgelegt ist, eine Vielzahl direktionaler Lichtstrahlen (111) bereitzustellen, die Richtungen aufweisen, die jeweiligen Blickrichtungen der Vielzahl von unterschiedlichen Ansichten entsprechen, wobei ein Mehrstrahlelement des Mehrstrahlelement-Arrays dazu ausgelegt ist, einen Anteil des geleiteten Lichts als direktionale Lichtstrahlen der Vielzahl von direktionalen Lichtstrahlen aus dem Lichtleiter heraus zu streuen;
und ein Array von Lichtventilen (116), das dazu ausgelegt ist, die Vielzahl von direktionalen Lichtstrahlen zu modulieren, um das Mehrfachansichtbild bereitzustellen; und
ein optisches System (120), das dazu ausgelegt ist, die Vielzahl von unterschiedlichen Ansichten des Mehrfachansichtbildes an eine entsprechende Vielzahl unterschiedlicher Orte innerhalb einer Eyebox (102) an einem Ausgang der augennahen Anzeige weiterzuleiten;
**dadurch gekennzeichnet, dass** das Mehrstrahlelement ein mikrorefraktives Element mit einer inversen prismatischen Form umfasst.

2. Augennahe Anzeige nach Anspruch 1, wobei die entsprechende Vielzahl von unterschiedlichen Orten innerhalb der Eyebox dazu ausgelegt ist, einem Benutzer der augennahen Anzeige Tiefenschärfesignale zu vermitteln, und wobei unterschiedliche Ansichten der Vielzahl von unterschiedlichen Ansichten unterschiedliche perspektivische Ansichten des Mehrfachansichtbildes repräsentieren.

3. Augennahe Anzeige nach Anspruch 1, wobei die Vielzahl der unterschiedlichen Ansichten des Mehrfachansichtbildes mindestens vier unterschiedliche Ansichten einschließt.

4. Augennahe Anzeige nach Anspruch 1, wobei die Vielzahl der unterschiedlichen Ansichten eine Gesamtwinkelausdehnung hat, und das optische System eine Eingangsapertur hat, wobei die Gesamtwinkelausdehnung so ausgelegt ist, dass sie der Größe der Eingangsapertur im Wesentlichen entspricht.

5. Augennahe Anzeige nach Anspruch 1, wobei das optische System einen einfachen Vergrößerer (122) umfasst, der dazu ausgelegt ist, ein virtuelles Bild des Mehrfachansichtbildes in einem Abstand zu der Eyebox bereitzustellen, der einem normalen Akkommodationsbereich eines Auges eines Benutzers entspricht.

6. Augennahe Anzeige nach Anspruch 1, wobei sowohl die Mehrstrahlelement-basierte Anzeige als auch das optische System sich innerhalb eines Sichtfelds (FOV) eines Benutzers befinden, so dass ein Anteil des FOVs im Wesentlichen blockiert wird, wobei die augennahe Anzeige eine Virtual Reality-Anzeige ist, die ausgelegt ist, um eine Ansicht einer physischen Umgebung durch das Mehrfachansichtbild innerhalb des blockierten FOV-Anteils zu ersetzen.

7. Augennahe Anzeige nach Anspruch 1, wobei die Mehrstrahlelement-basierte Anzeige sich außerhalb eines Sichtfelds (FOV) eines Benutzers befindet, das optische System sich innerhalb des FOVs befindet, die augennahe Anzeige eine Augmented Reality-Anzeige ist, die ausgelegt ist, um eine Ansicht einer physischen Umgebung in dem FOV durch das Mehrfachansichtbild zu erweitern.

8. Augennahe Anzeige nach Anspruch 1, wobei das optische System ein Freiformprisma (124) umfasst.

9. Augennahe Anzeige nach Anspruch 1, wobei das optische System ferner eine Freiformkompensationslinse (126) umfasst.

10. Augennahe Anzeige nach Anspruch 1, wobei die Mehrstrahlelement-basierte Anzeige ferner eine Lichtquelle (118) umfasst, die optisch an einen Eingang des Lichtleiters gekoppelt ist, wobei die Lichtquelle ausgelegt ist, zu leitendes Licht als das geleitete Licht bereitzustellen, das einen von Null verschiedenen Ausbreitungswinkel aufweist und/oder gemäß einem vorgegebenen Kollimationsfaktor kollimiert ist.

11. Augennahes binokulares Anzeigesystem (200), umfassend ein Paar (210) der augennahen Anzeige nach Anspruch 1, wobei eine erste augennahe Anzeige des Paares ausgelegt ist, um einer ersten Eyebox (204) eine erste Vielzahl unterschiedlicher Ansichten eines ersten Mehrfachansichtbildes (202) bereitzustellen, eine zweite augennahe Anzeige des Paares ausgelegt ist, um einer zweiten Eyebox (204) eine zweite Vielzahl unterschiedlicher Ansichten eines zweiten Mehrfachansichtbildes (202) bereitzustellen, wobei die zweite Eyebox von der ersten Eyebox lateral versetzt ist, wobei die ersten und zweiten Mehrfachansichtbilder ein stereoskopisches Paar von Bildern repräsentieren.

12. Augennahes binokulares Anzeigesystem nach Anspruch 11, wobei das binokulare optische System ausgelegt ist, um die Vielzahl von unterschiedlichen Ansichten von jedem der Mehrfachansichtbilder an eine entsprechende Vielzahl von unterschiedlichen Orten innerhalb der Eyeboxes zu übertragen, wobei die unterschiedlichen Orte der unterschiedlichen Ansichten innerhalb der Eyeboxes ausgelegt sind, um einem Benutzer des augennahen binokularen Anzeigesystems Tiefenschärfesignale bereitzustellen, wobei die Tiefenschärfesignale binokularer Disparität zwischen den unterschiedlichen Mehrfachansichtbildern des stereoskopischen Bildpaares entsprechen.

13. Verfahren (300) zum Betrieb einer augennahen Anzeige, wobei das Verfahren Folgendes umfasst:
Bereitstellen eines Mehrfachansichtbildes mit einer Vielzahl von unterschiedlichen Ansichten unter Verwendung einer Mehrstrahlelement-basierten Mehrfachansichtanzeige (310), die ein Array von Mehrstrahlelementen und ein Array von Lichtventilen umfasst, wobei das Array von Mehrstrahlelementen eine Vielzahl von direktionalen Lichtstrahlen mit Richtungen bereitstellt, die jeweiligen Blickrichtungen der Vielzahl von unterschiedlichen Ansichten entsprechen, und wobei das Array von Lichtventilen die Vielzahl von direktionalen Lichtstrahlen als das Mehrfachansichtbild moduliert; und
Weiterleiten der Vielzahl von unterschiedlichen Ansichten des Mehrfachansichtbildes an eine Eyebox unter Verwendung eines optischen Systems (320),
wobei das Array von Mehrstrahlelementen die Vielzahl von direktionalen Lichtstrahlen durch Ausstreuen eines Anteils von geleitetem Licht aus einem Lichtleiter unter Verwendung des Arrays von Mehrstrahlelementen bereitstellt, um die Vielzahl von direktionalen Lichtstrahlen mit unterschiedlichen Hauptwinkelrichtungen zu produzieren, und wobei das Mehrstrahlelement ein mikrorefraktives Element mit einer inversen prismatischen Form umfasst.

14. Verfahren nach Anspruch 13 oder augennahe Anzeige nach Anspruch 1, wobei eine Größe des Mehrstrahlelements mit einer Größe eines Lichtventils in dem Lichtventil-Array vergleichbar ist.

## Revendications

1. Écran proche de l'œil (100) comprenant :
un écran à base d'éléments multifaisceaux (110) conçu pour fournir une pluralité de vues différentes d'une image multivue, l'écran à base d'éléments multifaisceaux comprenant :
un conduit de lumière (112) conçu pour guider la lumière le long d'une longueur du conduit de lumière sous forme de lumière guidée (113) ;
un réseau d'éléments multifaisceaux (114) conçu pour fournir une pluralité de faisceaux lumineux directionnels (111) ayant des directions correspondant à des directions de vue respectives de la pluralité de vues différentes, un élément multifaisceau du réseau d'éléments multifaisceaux étant conçu pour diffuser hors du conduit de lumière une partie de la lumière guidée sous forme de faisceaux lumineux directionnels de la pluralité de faisceaux lumineux directionnels ;
et un réseau de valves optiques (116) conçu pour moduler la pluralité de faisceaux lumineux directionnels afin de produire l'image multivue ; et
un système optique (120) conçu pour transmettre la pluralité de vues différentes de l'image multivue à une pluralité correspondante d'emplacements différents à l'intérieur d'une boîte à œil (102) au niveau d'une sortie de l'écran proche de l'œil ;
**caractérisé en ce que** l'élément multifaisceau comprend un microélément réfractif ayant la forme d'un prisme inversé.

2. Écran proche de l'œil de la revendication 1, dans lequel la pluralité correspondante d'emplacements différents à l'intérieur de la boîte à œil est conçue pour apporter des indices de profondeur de foyer à un utilisateur de l'écran proche de l'œil, et dans lequel différentes vues de la pluralité de vues différentes représentent différentes vues en perspective de l'image multivue.

3. Écran proche de l'œil de la revendication 1, dans lequel la pluralité de vues différentes de l'image multivue comporte au moins quatre vues différentes.

4. Écran proche de l'œil de la revendication 1, dans lequel la pluralité de vues différentes a une étendue angulaire totale et le système optique a une ouverture d'entrée, l'étendue angulaire totale étant conçue pour correspondre sensiblement à une taille de l'ouverture d'entrée.

5. Écran proche de l'œil de la revendication 1, dans lequel le système optique comprend une simple loupe (122) conçue pour fournir une image virtuelle de l'image multivue à une distance de la boîte à œil correspondant à une plage d'accommodation normale d'un œil d'un utilisateur.

6. Écran proche de l'œil de la revendication 1, dans lequel l'écran à base d'éléments multifaisceaux et le système optique sont tous deux situés à l'intérieur d'un champ de vision (FOV) d'un utilisateur afin d'obstruer sensiblement une partie du FOV, l'écran proche de l'œil étant un écran de réalité virtuelle conçu pour remplacer une vue d'un environnement physique par l'image multivue à l'intérieur de la partie obstruée du FOV.

7. Écran proche de l'œil de la revendication 1, dans lequel l'écran à base d'éléments multifaisceaux est situé à l'extérieur d'un champ de vision (FOV) d'un utilisateur, le système optique étant situé à l'intérieur du FOV, l'écran proche de l'œil étant un écran de réalité augmentée conçu pour augmenter une vue d'un environnement physique dans le FOV avec l'image multivue.

8. Écran proche de l'œil de la revendication 1, dans lequel le système optique comprend un prisme de forme libre (124).

9. Écran proche de l'œil de la revendication 1, dans lequel le système optique comprend en outre une lentille de compensation de forme libre (126).

10. Écran proche de l'œil de la revendication 1, dans lequel l'écran à base d'éléments multifaisceaux comprend en outre une source de lumière (118) couplée optiquement à une entrée du conduit de lumière, la source de lumière étant conçue pour fournir de la lumière devant être guidée sous la forme de la lumière guidée ayant un angle de propagation non nul et/ou étant collimatée en fonction d'un facteur de collimation prédéterminé.

11. Système d'affichage binoculaire proche de l'œil (200) comprenant une paire (210) de l'écran proche de l'œil de la revendication 1, un premier écran proche de l'œil de la paire étant conçu pour fournir une première pluralité de vues différentes d'une première image multivue (202) à une première boîte à œil (204), un deuxième écran proche de l'œil de la paire étant conçu pour fournir une deuxième pluralité de vues différentes d'une deuxième image multivue (202) à une deuxième boîte à œil (204), la deuxième boîte à œil étant décalée latéralement par rapport à la première boîte à œil, les première et deuxième images multivues représentant une paire stéréoscopique d'images.

12. Système d'affichage binoculaire proche de l'œil de la revendication 11, le système optique binoculaire étant conçu pour transmettre une pluralité de vues différentes de chacune des images multivues à une pluralité correspondante d'emplacements différents à l'intérieur des boîtes à œil, les différents emplacements des différentes vues à l'intérieur des boîtes à œil étant conçus pour apporter des indices de profondeur de foyer à un utilisateur du système d'affichage binoculaire proche de l'œil, les indices de profondeur de foyer correspondant à une disparité binoculaire entre les différentes images multivues de la paire d'images stéréoscopiques.

13. Procédé (300) de fonctionnement d'un écran proche de l'œil, le procédé comprenant :
la fourniture d'une image multivue ayant une pluralité de vues différentes au moyen d'un écran multivue à base d'éléments multifaisceaux (310) comprenant un réseau d'éléments multifaisceaux et un réseau de valves optiques, le réseau d'éléments multifaisceaux fournissant une pluralité de faisceaux lumineux directionnels ayant des directions correspondant à des directions de vue respectives de la pluralité de vues différentes et le réseau de valves optiques modulant la pluralité de faisceaux lumineux directionnels sous la forme de l'image multivue ; et
la transmission de la pluralité de vues différentes de l'image multivue à une boîte à œil au moyen d'un système optique (320),
dans lequel le réseau d'éléments multifaisceaux fournit la pluralité de faisceaux lumineux directionnels par diffusion à l'extérieur d'une partie de lumière guidée provenant d'un conduit de lumière au moyen du réseau d'éléments multifaisceaux afin de produire la pluralité de faisceaux lumineux directionnels ayant différentes directions angulaires principales, et dans lequel l'élément multifaisceau comprend un microélément réfractif ayant la forme d'un prisme inversé.

14. Procédé de la revendication 13 ou écran proche de l'œil de la revendication 1, dans lesquels une taille de l'élément multifaisceau est comparable à une taille d'une valve optique du réseau de valves optiques.
